(19)

Europäisches
Patentamt
European
Patent Office
Office européen
des brevets

(11) **EP 3 843 404 A1**

(12) **EUROPEAN PATENT APPLICATION**
published in accordance with Art. 153(4) EPC

(43) Date of publication:
**30.06.2021 Bulletin 2021/26**

(21) Application number: **19860217.9**

(22) Date of filing: **12.09.2019**

(51) Int Cl.:
***H04N 19/52*** (2014.01)

(86) International application number:
**PCT/CN2019/105711**

(87) International publication number:
**WO 2020/052653 (19.03.2020 Gazette 2020/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **13.09.2018 CN 201811068957
26.10.2018 CN 201811264674**

(71) Applicant: **HUAWEI TECHNOLOGIES CO., LTD.
Shenzhen, Guangdong 518129 (CN)**

(72) Inventors:
• **CHEN, Xu
Shenzhen, Guangdong 518129 (CN)**
• **ZHENG, Jianhua
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **DECODING METHOD AND DEVICE FOR PREDICTED MOTION INFORMATION**

(57) Embodiments of this application relate to a decoding method and a decoding apparatus for predicting motion information. The method comprises: parsing a bitstream to obtain a first identifier; determining a target element from a first candidate set based on the first identifier, where elements in the first candidate set comprise at least one first candidate motion information and a plurality of second candidate motion information, the first candidate motion information comprises first motion information, and the second candidate motion information comprises a preset motion information offset; and when the target element is the first candidate motion information, using the first candidate motion information as target motion information, where the target motion information is used to predict motion information of a to-be-processed picture block; or when the target element is obtained based on the plurality of second candidate motion information, parsing the bitstream to obtain a second identifier, and determining the target motion information based on the second identifier and one of the plurality of second candidate motion information.

FIG. 15

EP 3 843 404 A1

## Description

This application claims priority to Chinese Patent Application No. 201811068957.4, filed with the China National Intellectual Property Administration on September 13, 2018 and entitled "METHOD AND APPARATUS FOR VIDEO ENCODING AND DECODING", and claims priority to Chinese Patent Application No. 201811264674.7, filed with the China National Intellectual Property Administration on October 26, 2018 and entitled "DECODING METHOD AND DECODING APPARATUS FOR PREDICTING MOTION INFORMATION", which are incorporated herein by reference in their entireties.

## TECHNICAL FIELD

This application relates to the field of video encoding and decoding technologies, and in particular, to a decoding method and a decoding apparatus for predicting motion information.

## BACKGROUND

A digital video technology may be widely applied to various apparatuses, including a digital television, a digital live broadcast system, a wireless broadcast system, a personal digital assistant (personal digital assistant, PDA), a notebook computer, a tablet computer, an e-book reader, a digital camera, a digital recording apparatus, a digital media player, a video game apparatus, a video game console, a cellular or satellite radio telephone, a video conferencing apparatus, a video streaming transmission apparatus, and the like. A digital video apparatus may send, receive, encode, decode, and/or store digital video information efficiently by implementing a video decoding technology.

In the video decoding technology, a video compression technology is particularly important. In the video compression technology, inherent redundant information in a video sequence can be reduced or removed by performing spatial (intra) prediction and/or temporal (inter) prediction. A basic principle of video compression is to eliminate redundancy as much as possible based on a correlation between space domain, time domain, and a codeword. Currently, a prevalent method is to use a block-based hybrid video coding framework to implement video compression coding by performing steps such as prediction (including intra prediction and inter prediction), transform, quantization, and entropy encoding.

Inter prediction is to predict pixels of a current picture by using a time-domain correlation of a video and using pixels of a neighboring encoded picture, so as to achieve a purpose of effectively removing time-domain redundancy of the video. During inter prediction, predicted motion information of each picture block is determined from a candidate motion information list, so that a prediction block of the picture block is generated by using a motion compensation process. The motion information comprises reference picture information and a motion vector. The reference picture information comprises: unidirectional/bidirectional prediction information, a reference picture list, and a reference picture index corresponding to the reference picture list. The motion vector refers to a positional shift in horizontal and vertical directions.

Currently, there are many inter prediction manners, including a merge (Merge) mode, an affine merge (Affine Merge) mode, an advanced motion vector prediction (Advanced Motion Vector Prediction, AMVP) mode, an affine advanced motion vector prediction (Affine AMVP) mode, and the like.

To improve accuracy of inter prediction, when more candidates are introduced, a length of the candidate motion information list becomes longer, which is unfavorable to a detection process and hardware implementation.

## SUMMARY

Embodiments of this application provide a decoding method and a decoding apparatus for predicting motion information, so as to effectively control a length of a candidate motion information list when more candidate motion information is introduced.

To achieve the foregoing objectives, the following technical solutions are used in the embodiments of this application.

In a first aspect of the embodiments of this application, a decoding method for predicting motion information is provided and comprises: parsing a bitstream to obtain a first identifier; determining a target element from a first candidate set, based on the first identifier, where elements in the first candidate set comprise at least one first candidate motion information and a plurality of second candidate motion information, the first candidate motion information comprises first motion information, and the second candidate motion information comprises a preset motion information offset; and when the target element is the first candidate motion information, using, as target motion information, the first candidate motion information serving as the target element, where the target motion information is used to predict motion information of a to-be-processed picture block; or when the target element is obtained based on the plurality of second candidate motion information, parsing the bitstream to obtain a second identifier, and determining the target motion information based on the second identifier and one of the plurality of second candidate motion information.

According to the decoding method for predicting motion information provided in this application, the elements in the first candidate set comprise the first candidate motion information and the plurality of second candidate motion information. In this way, in a structure of a multi-layer candidate set, when more candidates are introduced, a set of one type of candidate motion information may be used as one element and added to the first candidate set. Compared with directly adding candidate motion information to the first candidate set, the solution in this application greatly shortens a length of the first candidate set. When the first candidate set is a candidate motion information list of inter prediction, even if more candidates are introduced, a length of the candidate motion information list can be well controlled, thereby facilitating a detection process and hardware implementation.

In a feasible implementation of the first aspect, the first identifier may be a category identifier, used to indicate a category to which the target element belongs.

In a feasible implementation of the first aspect, the decoding method for predicting motion information provided in the embodiments of this application may further comprise: parsing the bitstream to obtain a fourth identifier, where the fourth identifier is an index of the target element in a category indicated by the first identifier in the first candidate set. In this implementation, the target element is uniquely determined by using the fourth identifier and the first identifier.

In a feasible implementation of the first aspect, the first candidate motion information comprises motion information of a spatially neighboring picture block of the to-be-processed picture block.

In a feasible implementation of the first aspect, the first candidate motion information may be candidate motion information generated in a merge mode.

In a feasible implementation of the first aspect, the second candidate motion information is obtained based on the first motion information and the preset motion information offset.

In a feasible implementation of the first aspect, the determining the target motion information based on the second identifier and one of the plurality of pieces of second candidate motion information comprises: determining a target offset from a plurality of preset motion information offsets based on the second identifier; and determining the target motion information based on the first motion information and the target offset.

In a feasible implementation of the first aspect, in the at least one first candidate motion information, a coded codeword which is used to identify the first motion information is the shortest codeword.

In a feasible implementation of the first aspect, when the target element is obtained based on the plurality of second candidate motion information, the decoding method for predicting motion information provided in this application may further comprise: parsing the bitstream to obtain a third identifier, where the third identifier comprises a preset coefficient.

In a feasible implementation of the first aspect, before the determining the target motion information based on the second identifier and one of the plurality of second candidate motion information, the method further comprises: multiplying the plurality of preset motion information offsets by the preset coefficient, to obtain a plurality of adjusted motion information offsets.

In a feasible implementation of the first aspect, that the target motion information is used to predict motion information of a to-be-processed picture block comprises: using the target motion information as the motion information of the to-be-processed picture block; or using the target motion information as predicted motion information of the to-be-processed picture block. After the motion information or the predicted motion information of the to-be-processed picture block is obtained, motion compensation is performed to generate a picture block or a predicted block of the to-be-processed picture block.

In a feasible implementation of the first aspect, a fixed-length coding mode may be used for the second identifier, so that a quantity of bytes occupied by the identifier can be reduced.

In a feasible implementation of the first aspect, a variable-length coding mode may be used for the second identifier, so that more candidate motion information can be identified.

In a second aspect of the embodiments of this application, another decoding method for predicting motion information is provided and the method comprises: parsing a bitstream to obtain a first identifier; determining a target element from a first candidate set, based on the first identifier, where elements in the first candidate set comprise at least one first candidate motion information and at least one second candidate set, and elements in the second candidate set comprise a plurality of second candidate motion information; and when the target element is the first candidate motion information, using, as target motion information, the first candidate motion information serving as the target element, where the target motion information is used to predict motion information of a to-be-processed picture block; or when the target element is the second candidate set, parsing the bitstream to obtain a second identifier, and determining the target motion information from the plurality of second candidate motion information based on the second identifier.

According to the decoding method for predicting motion information provided in this application, the elements in the first candidate set comprise the first candidate motion information and the at least one second candidate set. In this way, in a structure of a multi-layer candidate set, when more candidates are introduced, a set of one type of candidate motion information may be used as one element and added to the first candidate set. Compared with directly adding candidate motion information to the first candidate set, the solution in this application greatly shortens a length of the first candidate set. When the first candidate set is a candidate motion information list of inter prediction, even if more candidates are introduced, a length of the candidate motion information list can be well controlled, thereby facilitating a detection process and hardware implementation.

In a feasible implementation of the second aspect, the first identifier may be a category identifier, used to indicate a category to which the target element belongs.

In a feasible implementation of the second aspect, the decoding method for predicting motion information provided in the embodiments of this application may further comprise: parsing the bitstream to obtain a fourth identifier, where the fourth identifier is an index of the target element in a category indicated by the first identifier in the first candidate set. In this implementation, the target element is uniquely determined by using the fourth identifier and the first identifier.

In a feasible implementation of the second aspect, the first candidate motion information comprises motion information of a spatially neighboring picture block of the to-be-processed picture block.

In a feasible implementation of the second aspect, the first candidate motion information may be candidate motion information generated in a merge mode.

In a feasible implementation of the second aspect, the second candidate motion information comprises motion information of a spatially non-neighboring picture block of the to-be-processed picture block.

In a feasible implementation of the second aspect, the second candidate motion information may be candidate motion information generated in an affine merge mode.

In a feasible implementation of the second aspect, the first candidate motion information comprises first motion information, the second candidate motion information comprises second motion information, and the second motion information is obtained based on the first motion information and a preset motion information offset.

In a feasible implementation of the second aspect, the first candidate motion information comprises the first motion information, and the second candidate motion information comprises the preset motion information offset. Correspondingly, the determining the target motion information from the plurality of second candidate motion information based on the second identifier comprises: determining a target offset from a plurality of preset motion information offsets based on the second identifier; and determining the target motion information based on the first motion information and the target offset.

In a feasible implementation of the second aspect, the first candidate motion information comprises first motion information, the at least one second candidate set comprised in the first candidate set is a plurality of second candidate sets, the plurality of second candidate sets comprise at least one third candidate set and at least one fourth candidate set, elements in the third candidate set comprise motion information of spatially non-neighboring picture blocks of a plurality of to-be-processed picture blocks, and elements in the fourth candidate set comprise a plurality of motion information obtained based on the first motion information and the preset motion information offset.

In a feasible implementation of the second aspect, in the at least one first candidate motion information, a coded codeword which is used to identify the first motion information is the shortest codeword.

In a feasible implementation of the second aspect, the first motion information does not comprise motion information obtained in an alternative temporal motion vector prediction (alternative temporal motion vector prediction, ATMVP) mode.

In a feasible implementation of the second aspect, the at least one second candidate set comprised in the first candidate set is a plurality of second candidate sets, the plurality of second candidate sets comprise at least one fifth candidate set and at least one sixth candidate set, elements in the fifth candidate set comprise motion information of spatially non-neighboring picture blocks of a plurality of to-be-processed picture blocks, and elements in the sixth candidate set comprise a plurality of preset motion information offsets.

In a feasible implementation of the second aspect, when the target element is the second candidate set, the decoding method for predicting motion information provided in this application may further comprise: parsing the bitstream to obtain a third identifier, where the third identifier comprises a preset coefficient.

In a feasible implementation of the second aspect, before the determining a target offset from a plurality of preset motion information offsets based on the second identifier, the method further comprises: multiplying the plurality of preset motion information offsets by the preset coefficient comprised in the third identifier, to obtain a plurality of adjusted motion information offsets; and correspondingly, the determining a target offset from a plurality of preset motion information offsets based on the second identifier comprises: determining, based on the second identifier, the target offset from the plurality of adjusted motion information offsets that are adjusted based on the preset coefficient.

In a feasible implementation of the second aspect, the second candidate motion information is different from the first candidate motion information. Specifically, the first candidate motion information and the second candidate motion information may be selected according to different inter prediction modes.

In a feasible implementation of the second aspect, that the target motion information is used to predict motion information of a to-be-processed picture block comprises: using the target motion information as the motion information of the to-be-processed picture block; or using the target motion information as predicted motion information of the to-be-processed picture block. After the motion information or the predicted motion information of the to-be-processed picture block is obtained, motion compensation is performed to generate a picture block or a predicted block of the to-be-processed picture block.

In a feasible implementation of the second aspect, a fixed-length coding mode may be used for the second identifier, so that a quantity of bytes occupied by the identifier can be reduced.

In a feasible implementation of the second aspect, a variable-length coding mode may be used for the second identifier, so that more candidate motion information can be identified.

It should be noted that, for specific implementation of the decoding methods for predicting motion information provided in the first aspect and the second aspect, reference may be made to each other, and details are not described herein again.

In a third aspect of the embodiments of this application, a decoding apparatus for predicting motion information is provided and comprises: a parsing module, configured to parse a bitstream to obtain a first identifier; a determining module, configured to determine a target element from a first candidate set based on the first identifier, where elements in the first candidate set comprise at least one first candidate motion information and a plurality of second candidate motion information, the first candidate motion information comprises first motion information, and the second candidate motion information comprises a preset motion information offset; and an assignment module, configured to: when the target element is the first candidate motion information, use the first candidate motion information as target motion information, where the target motion information is used to predict motion information of a to-be-processed picture block; where the parsing module is further configured to: when the target element is obtained based on the plurality of second candidate motion information, parse the bitstream to obtain a second identifier, and determine the target motion information based on the second identifier and one of the plurality of second candidate motion information.

According to the decoding apparatus for predicting motion information provided in this application, the elements in the first candidate set comprise the first candidate motion information and the plurality of second candidate motion information. In this way, in a structure of a multi-layer candidate set, when more candidates are introduced, a set of one type of candidate motion information may be used as one element and added to the first candidate set. Compared with directly adding candidate motion information to the first candidate set, the solution in this application greatly shortens a length of the first candidate set. When the first candidate set is a candidate motion information list of inter prediction, even if more candidates are introduced, a length of the candidate motion information list can be well controlled, thereby facilitating a detection process and hardware implementation.

In a feasible implementation of the third aspect, the first candidate motion information may comprise motion information of a spatially neighboring picture block of the to-be-processed picture block.

In a feasible implementation of the third aspect, the second candidate motion information is obtained based on the first motion information and the preset motion information offset.

In a feasible implementation of the third aspect, the parsing module is specifically configured to:

determine a target offset from a plurality of preset motion information offsets based on the second identifier; and
determine the target motion information based on the first motion information and the target offset.

In a feasible implementation of the third aspect, in the at least one first candidate motion information, a coded codeword which is used to identify the first motion information is the shortest codeword.

In a feasible implementation of the third aspect, when the target element is obtained based on the plurality of second candidate motion information, the parsing module is further configured to: parse the bitstream to obtain a third identifier, where the third identifier comprises a preset coefficient.

In a feasible implementation of the third aspect, the apparatus further comprises a calculation module, configured to multiply the plurality of preset motion information offsets by the preset coefficient, to obtain a plurality of adjusted motion information offsets.

In a feasible implementation of the third aspect, the determining module is specifically configured to: determine, based on the second identifier, the target offset from the plurality of adjusted motion information offsets obtained by the calculation module; and determine the target motion information based on the first motion information and the target offset.

In a feasible implementation of the third aspect, the determining module is specifically configured to: use the target motion information as the motion information of the to-be-processed picture block; or use the target motion information as predicted motion information of the to-be-processed picture block.

In a feasible implementation of the third aspect, a fixed-length coding mode is used for the second identifier.

In a feasible implementation of the third aspect, a variable-length coding mode is used for the second identifier.

It should be noted that the decoding apparatus for predicting motion information provided in the third aspect of the embodiments of this application is configured to perform the decoding method for predicting motion information provided in the first aspect. Specific implementations are the same, and details are not described herein again.

In a fourth aspect of the embodiments of this application, a decoding apparatus for predicting motion information is provided and comprises: a parsing module, configured to parse a bitstream to obtain a first identifier; a determining module, configured to determine a target element from a first candidate set based on the first identifier, where elements in the first candidate set comprise at least one first candidate motion information and at least one second candidate set, and elements in the second candidate set comprise a plurality of second candidate motion information; and an assignment module, configured to: when the target element is the first candidate motion information, use the first candidate motion information as target motion information, where the target motion information is used to predict motion information of a to-be-processed picture block. The parsing module is further configured to: when the target element is the second candidate set, parse the bitstream to obtain a second identifier, and the determining module is further configured to determine the target motion information from the plurality of second candidate motion information based on the second identifier.

According to the decoding apparatus for predicting motion information provided in this application, the elements in the first candidate set comprise the first candidate motion information and the at least one second candidate set. In this way, in a structure of a multi-layer candidate set, when more candidates are introduced, a set of one type of candidate motion information may be used as one element and added to the first candidate set. Compared with directly adding candidate motion information to the first candidate set, the solution in this application greatly shortens a length of the first candidate set. When the first candidate set is a candidate motion information list of inter prediction, even if more candidates are introduced, a length of the candidate motion information list can be well controlled, thereby facilitating a detection process and hardware implementation.

In a feasible implementation of the fourth aspect, the first candidate motion information may comprise motion information of a spatially neighboring picture block of the to-be-processed picture block.

In a feasible implementation of the fourth aspect, the second candidate motion information may comprise motion information of a spatially non-neighboring picture block of the to-be-processed picture block.

In a feasible implementation of the fourth aspect, the first candidate motion information comprises first motion information, the second candidate motion information comprises second motion information, and the second motion information is obtained based on the first motion information and a preset motion information offset.

In a feasible implementation of the fourth aspect, the first candidate motion information comprises the first motion information, and the second candidate motion information comprises the preset motion information offset. Correspondingly, the parsing module is specifically configured to: determine a target offset from a plurality of preset motion information offsets based on the second identifier; and determine the target motion information based on the first motion information and the target offset.

In a feasible implementation of the fourth aspect, the first candidate motion information comprises first motion information, the at least one second candidate set is a plurality of second candidate sets, the plurality of second candidate sets comprise at least one third candidate set and at least one fourth candidate set, elements in the third candidate set comprise motion information of spatially non-neighboring picture blocks of a plurality of to-be-processed picture blocks, and elements in the fourth candidate set comprise a plurality of motion information obtained based on the first motion information and the preset motion information offset.

In a feasible implementation of the fourth aspect, in the at least one first candidate motion information, a coded codeword which is used to identify the first motion information is the shortest codeword.

In a feasible implementation of the fourth aspect, the first motion information does not comprise motion information obtained in an ATMVP mode.

In a feasible implementation of the fourth aspect, the at least one second candidate set is a plurality of second candidate sets, the plurality of second candidate sets comprise at least one fifth candidate set and at least one sixth candidate set, elements in the fifth candidate set comprise motion information of spatially non-neighboring picture blocks of a plurality of to-be-processed picture blocks, and elements in the sixth candidate set comprise a plurality of preset motion information offsets.

In a feasible implementation of the fourth aspect, when the target element is the second candidate set, the parsing module is further configured to: parse the bitstream to obtain a third identifier, where the third identifier comprises a preset coefficient.

In a feasible implementation of the fourth aspect, the decoding apparatus further comprises a calculation module, configured to multiply the plurality of preset motion information offsets by the preset coefficient, to obtain a plurality of adjusted motion information offsets. Correspondingly, the determining module is specifically configured to: determine, based on the second identifier, the target offset from the plurality of adjusted motion information offsets obtained by the calculation module, and then determine the target motion information based on the first motion information and the target offset.

In a feasible implementation of the fourth aspect, the second candidate motion information is different from the first candidate motion information.

In a feasible implementation of the fourth aspect, the determining module is specifically configured to: use the target motion information as the motion information of the to-be-processed picture block; or use the target motion information as predicted motion information of the to-be-processed picture block.

In a feasible implementation of the fourth aspect, a fixed-length coding mode is used for the second identifier.

In a feasible implementation of the fourth aspect, a variable-length coding mode is used for the second identifier.

In a fifth aspect of the embodiments of this application, a decoding apparatus for predicting motion information is provided, and comprises a processor and a memory coupled to the processor. The processor is configured to perform the decoding method for predicting motion information in the first aspect or the second aspect.

In a sixth aspect of the embodiments of this application, a video decoder is provided, and comprises a non-volatile storage medium and a central processing unit. The non-volatile storage medium stores an executable program. The central processing unit is connected to the non-volatile storage medium, and performs the decoding method for predicting motion information in the first aspect, the second aspect, or any one of the possible implementations.

In a seventh aspect of the embodiments of this application, a computer-readable storage medium is provided. The computer-readable storage medium stores an instruction, and when the instruction is run on a computer, the computer is enabled to perform the decoding method for predicting motion information in the first aspect or the second aspect.

In an eighth aspect of the embodiments of this application, a computer program product including an instruction is provided. When the instruction is run on a computer, the computer is enabled to perform the decoding method for predicting motion information in the first aspect or the second aspect.

It should be understood that the technical solutions of the third aspect to the eighth aspect of this application are consistent with those of the first aspect or the second aspect of this application, and the beneficial effects achieved by all the aspects and the corresponding implementable design manners are similar. Details are not described again.

**BRIEF DESCRIPTION OF DRAWINGS**

FIG. 1 is a block diagram of an example of a video coding system that may be configured for use in an embodiment of this application;
FIG. 2 is a system block diagram of an example of a video encoder that may be configured for use in an embodiment of this application;
FIG. 3 is a system block diagram of an example of a video decoder that may be configured for use in an embodiment of this application;
FIG. 4 is a block diagram of an example of an inter prediction module that may be configured for use in an embodiment of this application;
FIG. 5 is a flowchart of an example implementation of a merge prediction mode;
FIG. 6 is a flowchart of an example implementation of an advanced motion vector prediction mode;

FIG. 7 is a flowchart of an example implementation of motion compensation by a video decoder that may be configured for use in an embodiment of this application;
FIG. 8 is a schematic diagram of an example of a coding unit and a neighboring picture block associated with the coding unit;
FIG. 9 is a flowchart of an example implementation of constructing a candidate predicted motion vector list;
FIG. 10 is a schematic diagram of an example implementation of adding a combined candidate motion vector to a merge-mode candidate predicted motion vector list;
FIG. 11 is a schematic diagram of an example implementation of adding a scaled candidate motion vector to a merge-mode candidate predicted motion vector list;
FIG. 12 is a schematic diagram of an example implementation of adding a zero motion vector to a merge-mode candidate predicted motion vector list;
FIG. 13 is a schematic diagram of an example of another coding unit and a neighboring picture block associated with the coding unit;
FIG. 14A is a schematic diagram of an example of a method for constructing a candidate motion vector set;
FIG. 14B is a schematic diagram of an example of a method for constructing a candidate motion vector set;
FIG. 15 is a schematic flowchart of a decoding method for predicting motion information according to an embodiment of this application;
FIG. 16A is a schematic diagram of an example of a method for constructing a candidate motion vector set;
FIG. 16B is a schematic diagram of an example of a method for constructing a candidate motion vector set;
FIG. 16C is a schematic diagram of an example of a method for constructing a candidate motion vector set;
FIG. 17 is a schematic block diagram of a decoding apparatus for predicting motion information according to an embodiment of this application; and
FIG. 18 is a schematic block diagram of a decoding apparatus for predicting motion information according to an embodiment of this application.

**DESCRIPTION OF EMBODIMENTS**

In the specification, claims, and accompanying drawings of this application, terms such as "first", "second", "third", and "fourth" are intended to distinguish between different objects but do not indicate a particular order.

In embodiments of this application, the words such as "example" or "for example" are used to represent giving an example, an illustration, or a description. Any embodiment or design scheme described as the word "example" or "for example" in the embodiments of this application should not be explained as being more preferred or having more advantages than another embodiment or design scheme. Exactly, use of the word such as "example" or "for example" is intended to present a related concept in a specific manner.

The following clearly describes the technical solutions in the embodiments of this application with reference to the accompanying drawings in the embodiments of this application.

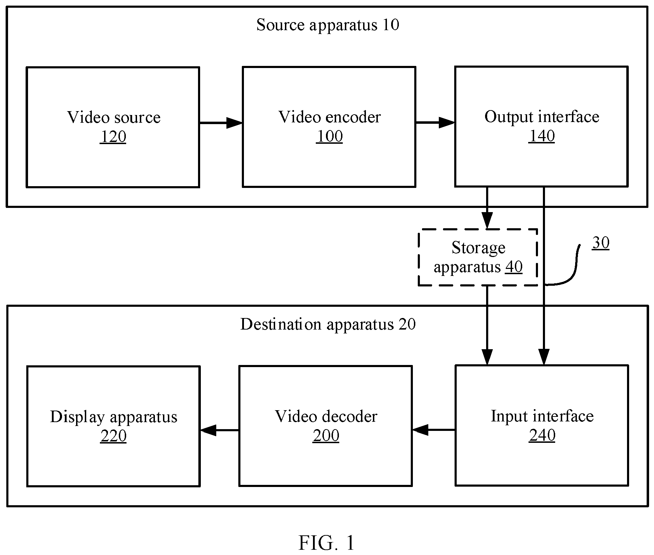

FIG. 1 is a block diagram of an example of a video coding system 1 according to an embodiment of this application. As used in this specification, the term "video codec" usually refers to a video encoder and a video decoder. In this application, the term "video coding" or "coding" may usually refer to video encoding or video decoding. A video encoder 100 and a video decoder 200 in the video coding system 1 are configured to predict motion information, for example, a motion vector, of a current coded picture block or a sub-block of the current coded picture block based on any one of a plurality of new inter prediction modes, so that the predicted motion vector is maximally close to a motion vector obtained by using a motion estimation method. In this way, a motion vector difference does not need to be transmitted during encoding, thereby further improving encoding and decoding performance.

As shown in FIG. 1, the video coding system 1 comprises a source apparatus 10 and a destination apparatus 20. The source apparatus 10 generates encoded video data. Therefore, the source apparatus 10 may be referred to as a video encoding apparatus. The destination apparatus 20 may decode the encoded video data generated by the source apparatus 10. Therefore, the destination apparatus 20 may be referred to as a video decoding apparatus. Various implementation solutions of the source apparatus 10, the destination apparatus 20, or both the source apparatus 10 and the destination apparatus 20 may comprise one or more processors and a memory coupled to the one or more processors. The memory may comprise but is not limited to a RAM, a ROM, an EEPROM, a flash memory, or any other medium that can be used to store desired program code in a form of an instruction or a data structure accessible to a computer, as described in this specification.

The source apparatus 10 and the destination apparatus 20 may comprise various apparatuses, including a desktop computer, a mobile computing apparatus, a notebook (for example, laptop) computer, a tablet computer, a set top box, a handheld telephone set such as a "smart" phone, a television set, a camera, a display apparatus, a digital media player, a video game console, an in-vehicle computer, and similar apparatuses.

The destination apparatus 20 may receive the encoded video data from the source apparatus 10 through a link 30. The link 30 may comprise one or more media or apparatuses that can transfer the encoded video data from the source apparatus 10 to the destination apparatus 20. In an example, the link 30 may comprise one or more communications media that enable the source apparatus 10 to directly transmit the encoded video data to the destination apparatus 20 in real time. In this example, the source apparatus 10 may modulate the encoded video data according to a communications standard (for example, a wireless communications protocol), and may transmit the modulated video data to the destination apparatus 20. The one or more communications media may comprise a wireless and/or wired communications medium, for example, a radio frequency (radio frequency, RF) spectrum or one or more physical transmission lines. The one or more communications media may be a part of a packet-based network, and the packet-based network is, for example, a local area network, a wide area network, or a global network (for example, the internet). The one or more communications media may comprise a router, a switch, a base station, or another device facilitating communication from the source apparatus 10 to the destination apparatus 20.

In another example, the encoded data may be output to a storage apparatus 40 through an output interface 140. Similarly, the encoded data may be accessed from the storage apparatus 40 through an input interface 240. The storage apparatus 40 may comprise any one of a plurality of distributed data storage media or locally accessed data storage media, for example, a hard drive, a Blu-ray, a digital versatile disc (digital versatile disc, DVD), a compact disc read-only memory (compact disc read-only memory, CD-ROM), a flash memory, a volatile or nonvolatile memory, or any other appropriate digital storage medium configured to store the encoded video data.

In another example, the storage apparatus 40 may correspond to a file server or another intermediate storage apparatus that can maintain an encoded video generated by the source apparatus 10. The destination apparatus 20 may access the stored video data from the storage apparatus 40 through streaming transmission or downloading. The file server may be any type of server capable of storing the encoded video data and transmitting the encoded video data to the destination apparatus 20. In an example, the file server comprises a network server (for example, used for a website), a file transfer protocol (file transfer protocol, FTP) server, a network attached storage (network attached storage, NAS) apparatus, or a local magnetic disk drive. The destination apparatus 20 may access the encoded video data through any standard data connection (including an internet connection). The standard data connection may comprise a wireless channel (for example, a Wireless-Fidelity (wireless-fidelity, Wi-Fi) connection), a wired connection (for example, a digital subscriber line (digital subscriber line, DSL) or a cable modem), or a combination thereof that is suitable for accessing the encoded video data stored on the file server. Transmission of the encoded video data from the storage apparatus 40 may be streaming transmission, downloading transmission, or a combination thereof.

The decoding method for predicting motion information provided in the embodiments of this application may be applied to video coding to support a plurality of multimedia applications, for example, over-the-air television broadcast, wireless television transmission, satellite television transmission, streaming video transmission (for example, through the internet), encoding of video data stored in a data storage medium, decoding of video data stored in a data storage medium, or another application. In some examples, the video coding system 1 may be configured to support unidirectional or bidirectional video transmission, to support applications such as video streaming transmission, video playback, video broadcasting, and/or videotelephony.

The video coding system 1 described in FIG. 1 is merely an example, and the technology in this application is applicable to a video coding/decoding setting (for example, video coding or video decoding) that does not necessarily comprise any data communication between an encoding apparatus and a decoding apparatus. In another example, data is retrieved from a local memory, is transmitted on a network in a streaming manner, and the like. The video encoding apparatus may encode the data and store the data in the memory, and/or the video decoding apparatus may retrieve the data from the memory and decode the data. In many examples, apparatuses that only encode data and store the data in the memory and/or retrieve the data from the memory and decode the data and that do not communicate with each other perform encoding and decoding.

In the example in FIG. 1, the source apparatus 10 comprises a video source 120, the video encoder 100, and the output interface 140. In some examples, the output interface 140 may comprise a modulator/demodulator (modem) and/or a transmitter. The video source 120 may comprise a video capturing apparatus (for example, a camera), a video archive including previously captured video data, a video feed-in interface for receiving video data from a video content provider, and/or a computer graphics system for generating video data, or a combination of the foregoing video data sources.

The video encoder 100 may encode video data that is from the video source 120. In some examples, the source apparatus 10 directly transmits the encoded video data to the destination apparatus 20 through the output interface 140. In another example, the encoded video data may be alternatively stored in the storage apparatus 40, so that the destination apparatus 20 subsequently accesses the encoded video data for decoding and/or playing.

In the example in FIG. 1, the destination apparatus 20 comprises the input interface 240, the video decoder 200, and a display apparatus 220. In some examples, the input interface 240 comprises a receiver and/or a modem. The input interface 240 may receive the encoded video data through the link 30 and/or from the storage apparatus 40. The display apparatus 220 may be integrated with the destination apparatus 20 or may be located outside the destination apparatus 20. Usually, the display apparatus 220 displays decoded video data. There may be a plurality of types of display apparatuses 220. For example, the display apparatus 220 may be, for example, a liquid crystal display (liquid crystal display, LCD), a plasma display, an organic light-emitting diode (organic light-emitting diode, OLED) display, or another type of display apparatus.

Although not shown in FIG. 1, in some aspects, the video encoder 100 and the video decoder 200 may be respectively integrated with an audio encoder and an audio decoder, and may comprise an appropriate multiplexer-demultiplexer unit or other hardware and software, to encode an audio and a video in a combined data stream or a separate data stream. In some examples, if applicable, a demultiplexer (MUX-DEMUX) unit may comply with the international telecommunication union (international telecommunication union, ITU) H.223 multiplexer protocol or other protocols such as the user datagram protocol (user datagram protocol, UDP).

For example, the video encoder 100 and the video decoder 200 each may be implemented as any one of a plurality of circuits: one or more microprocessors, a digital signal processing (digital signal processing, DSP), an application-specific integrated circuit (application-specific integrated circuit, ASIC), and a field-programmable gate array (field-programmable gate array, FPGA), a discrete logic, hardware, or any combination thereof. If this application is implemented partially through software, the apparatus may store, in an appropriate non-volatile computer-readable storage medium, an instruction used for the software, and may use one or more processors to execute the instruction in hardware, to implement the technologies in this application. Any one of the foregoing content (including hardware, software, a combination of hardware and software, and the like) may be considered as one or more processors. The video encoder 100 and the video decoder 200 each may be comprised in one or more encoders or decoders, and the encoder or the decoder may be integrated as a part of a combined encoder/decoder (codec) in a corresponding apparatus.

In this application, the video encoder 100 may be usually referred to as another apparatus "signaling" or "transmitting" some information to, for example, the video decoder 200. The term "signaling" or "transmitting" may roughly refer to transfer of a syntactic element and/or other data used to decode compressed video data. The transmission may occur in real time or almost in real time. Alternatively, the communication may occur after a period of time. For example, the communication may occur when a syntactic element in an encoded bitstream is stored in a computer-readable storage medium during encoding, and the decoding apparatus may then retrieve the syntactic element at any time after the syntactic element is stored in the medium.

The JCT-VC develops the H.265 (high efficiency video coding (high efficiency video coding, HEVC)) standard. HEVC standardization is based on an evolved model of a video decoding apparatus called an HEVC test model (HEVC model, HM). A latest H.265 standard document is available at http://www.itu.int/rec/T-REC-H.265. A latest version of the standard document is H.265 (12/16), and the standard document is incorporated herein by reference in its entirety. In the HM, it is assumed that the video decoding apparatus has several additional capabilities relative to an existing algorithm of ITU-TH.264/AVC. For example, H.264 provides nine intra prediction coding modes, whereas the HM can provide up to 35 intra prediction coding modes.

JVET is committed to developing the H.266 standard. An H.266 standardization process is based on an evolved model of the video decoding apparatus, where the model is referred to as the H.266 test model. H.266 algorithm descriptions are available at http://phenix.int-evry.fr/jvet, and latest algorithm descriptions are comprised in JVET-FI001-v2. A document of the algorithm descriptions is incorporated herein by reference in its entirety. In addition, reference software for a JEM test model is available at https://jvet.hhi.fraunhofer.de/svn/svn_HMJEMSoftware/, and is also incorporated herein by reference in its entirety.

In general, an operation model description of the HM may partition a video frame or a picture into a sequence of tree blocks including both luminance and chrominance samples or a sequence of largest coding units (largest coding unit, LCU), where the LCU is also referred to as a coding tree unit (coding tree unit, CTU). A tree block has a function similar to that of a macroblock in the H.264 standard. A slice comprises several consecutive tree blocks in a decoding order. The video frame or picture may be partitioned into one or more slices. Each tree block can be split into coding units based on a quadtree. For example, a tree block serving as a root node of the quadtree may be split into four child nodes, and each child node may also serve as a parent node and is split into four other child nodes. A final non-splittable child node serving as a leaf node of the quadtree comprises a decoding node, for example, a decoded video block. In syntactic data associated with a decoded bitstream, a maximum quantity of times that the tree block can be split and a minimum size of the decoding node may be defined.

A coding unit comprises a decoding node, a prediction unit (prediction unit, PU), and a transform unit (transform unit, TU) associated with the decoding node. A size of the CU corresponds to a size of the decoding node, and a shape of the CU needs to square. The size of the CU may range from 8 x 8 pixels to a maximum of 64 x 64 pixels, or may be a larger tree block size. Each CU may comprise one or more PUs and one or more TUs. For example, syntactic data associated with the CU may describe partitioning of a CU into one or more PUs.

Partitioning patterns may vary when the CU is encoded in a skip or direct mode, encoded in an intra prediction mode, or encoded in an inter prediction mode. The PU obtained through partitioning may be in a non-square shape. For example, the syntactic data associated with the CU may also describe partitioning of a CU into one or more TUs based on the quadtree. The TU may be in a square or non-square shape.

The HEVC standard allows TU-based transform. Different CUs may comprise different TUs. A size of a TU is usually set based on a size of a PU within a given CU defined for a partitioned LCU. However, a case may not always be like this. The size of the TU is usually the same as or less than that of the PU. In some feasible implementations, a quadtree structure referred to as a "residual quadtree" (residual quadtree, RQT) may be used to split a residual sample corresponding to the CU into smaller units. A leaf node of the RQT may be referred to as a TU. A pixel difference associated with the TU may be transformed to generate a transform coefficient, and the transform coefficient may be quantized.

Generally, a PU comprises data related to a prediction process. For example, when the PU is encoded in the intra mode, the PU may comprise data describing the intra prediction mode of the PU. In another feasible implementation, when the PU is encoded in an inter mode, the PU may comprise data defining a motion vector for the PU. For example, the data defining the motion vector for the PU may describe a horizontal component of the motion vector, a vertical component of the motion vector, a resolution (for example, 1/4 pixel precision or 1/8 pixel precision) of the motion vector, a reference picture to which the motion vector points, and/or a reference picture list (for example, a list 0, a list 1, or a list C) of the motion vector.

Generally, transform and quantization processes are used for a TU. A given CU including one or more PUs may also comprise one or more TUs. After prediction, the video encoder 100 may calculate a residual value corresponding to the PU. The residual value comprises a pixel difference. The pixel difference may be transformed into a transform coefficient, and the transform coefficient is quantized and is scanned by using a TU, to generate serialized transform coefficients for entropy decoding. In this application, the term "video block" is usually used to indicate a decoding node of a CU. In some specific applications, in this application, the term "video block" may also be used to indicate a tree block including a decoding node, a PU, and a TU, for example, the tree block is an LCU or a CU.

A video sequence usually comprises a series of video frames or pictures. For example, a group of pictures (group of picture, GOP) comprises a series of video pictures, or one or more video pictures. The GOP may comprise syntactic data in header information of the GOP, in header information of one or more of the pictures, or elsewhere, and the syntactic data describes a quantity of pictures comprised in the GOP. Each slice of a picture may comprise slice syntactic data describing a coding mode of the corresponding picture. The video encoder 100 usually performs an operation on video blocks in some video slices, to encode the video data. The video block may correspond to the decoding node in the CU. A size of the video block may be fixed or changeable, and may vary with a specified decoding standard.

In a feasible implementation, HM supports prediction for a variety of PU sizes. Assuming that a size of a given CU is 2N x 2N, the HM supports intra prediction for a PU size of 2N x 2N or N x N, and inter prediction for a symmetric PU size of 2N x 2N, 2N x N, N x 2N, or N x N. The HM also supports asymmetric partitioning of inter prediction for PU sizes of 2N x nU, 2N x nD, nL x 2N, and nR x 2N. In asymmetric partitioning, the CU is not partitioned in a direction, and is partitioned into two parts in another direction, where one part accounts for 25% of the CU and the other part accounts for 75% of the CU. The part accounting for 25% of the CU is indicated by an indicator including "n" followed by "U (Up)", "D (Down)", "L (Left)" or "R (Right)". Therefore, for example, "2N x nU" refers to a horizontally partitioned 2N x 2N CU, with a 2N x 0.5N PU at the top and a 2N x 1.5N PU at the bottom.

In this application, "N x N" and "N multiplied by N" may be used interchangeably to indicate a pixel size of a video block in a vertical dimension and a horizontal dimension, for example, 16 x 16 pixels or 16 multiplied by 16 pixels. Generally, a 16 x 16 block has 16 pixels in a vertical direction (y = 16) and has 16 pixels in a horizontal direction (x = 16). Similarly, an N x N block usually has N pixels in a vertical direction and N pixels in a horizontal direction, where N is a nonnegative integer value. Pixels in a block may be arranged in rows and columns. In addition, in a block, a quantity of pixels in the horizontal direction and a quantity of pixels in the vertical direction may not be necessarily the same. For example, a block may comprise N x M pixels, where M is not necessarily equal to N.

After intra predictive or inter predictive decoding of PUs in the CU, the video encoder 100 may calculate residual data of TUs in the CU. A PU may comprise pixel data in spatial domain (also referred to as pixel domain), and a TU may comprise a coefficient in transform domain after transform (for example, discrete cosine transform (discrete cosine transform, DCT), integer transform, wavelet transform, or other conceptually similar transform) is applied to residual video data. The residual data may correspond to a pixel difference between a pixel of an unencoded picture and a predictor corresponding to the PU. The video encoder 100 may generate a TU including residual data of the CU, and then transform the TU to generate a transform coefficient of the CU.

After performing any transform to generate transform coefficients, the video encoder 100 may quantize the transform coefficients. Quantization refers to, for example, a process of quantizing the coefficients, to reduce an amount of data used for representing the coefficients and implement further compression. The quantization process can reduce a bit depth associated with some or all of the coefficients. For example, during quantization, an n-bit value may be reduced to an m-bit value through rounding, where n is greater than m.

The JEM model further improves a video picture coding structure. Specifically, a block coding structure referred to as a "quadtree plus binary tree" (QTBT) structure is introduced. Without using concepts such as CU, PU, and TU in HEVC, the QTBT structure supports more flexible CU split shapes. A CU may be in a square shape or rectangular shape. Quadtree partitioning is first performed on a CTU, and binary tree partitioning is further performed on a leaf node of the quadtree. In addition, there are two binary tree partitioning modes: symmetric horizontal partitioning and symmetric vertical partitioning. A leaf node of a binary tree is referred to as a CU. The CU in the JEM model cannot be further partitioned during prediction and transform. In other words, the CU, the PU, and the TU in the JEM model have a same block size. In the existing JEM model, a maximum CTU size is 256 x 256 luma pixels.

In some feasible implementations, the video encoder 100 may scan the quantized transform coefficient in a predefined scanning order to generate a serialized vector that can be entropy coded. In other feasible implementations, the video encoder 100 may perform adaptive scanning. After scanning the quantized transform coefficient to form a one-dimensional vector, the video encoder 100 may entropy decode the one-dimensional vector through context-based adaptive variable-length coding (context-based adaptive variable-length code, CAVLC), context-based adaptive binary arithmetic coding (context-based adaptive binary arithmetic coding, CABAC), syntax-based adaptive binary arithmetic coding (syntax-based adaptive binary arithmetic coding, SBAC), probability interval partitioning entropy (probability interval partitioning entropy, PIPE) decoding, or another entropy decoding method. The video encoder 100 may further perform entropy coding on the syntax element associated with the encoded video data, to enable the video decoder 200 to decode the video data.

To perform CABAC, the video encoder 100 may assign a context in a context model to a to-be-transmitted symbol. The context may be related to whether an adjacent value of the symbol is non-zero. To perform CAVLC, the video encoder 100 may select a variable-length code of the to-be-transmitted symbol. A codeword in variable-length code (variable-length code, VLC) may be constructed, so that a shorter code corresponds to a more probable symbol and a longer code corresponds to a less probable symbol. In this way, compared with using equal-length codewords for all to-be-transmitted symbols, using VLC can reduce a bit rate. A probability in CABAC may be determined based on the context assigned to the symbol.

In this embodiment of this application, the video encoder may perform inter prediction to reduce temporal redundancy between pictures. As described above, a CU may have one or more prediction units PUs depending on different video compression coding standards. In other words, a plurality of PUs may belong to one CU, or a PU and a CU have a same size. In this specification, when a CU and a PU have a same size, a partitioning mode corresponding to the CU is no partition, or the CU is partitioned into one PU, and the PU is uniformly used for description. When the video encoder performs inter prediction, the video encoder may signal motion information for the PU to the video decoder. For example, the motion information for the PU may comprise a reference picture index, a motion vector, and a prediction direction identifier. The motion vector may indicate a displacement between a picture block (also referred to as a video block, a pixel block, a pixel set, or the like) of the PU and a reference block of the PU. The reference block of the PU may be a part of a reference picture similar to the picture block of the PU. The reference block may be located in a reference picture indicated by the reference picture index and the prediction direction identifier.

To reduce a quantity of coded bits required to represent the motion information for the PU, the video encoder may generate a candidate predicted motion vector (Motion Vector, MV) list for each PU according to a merge prediction mode or an advanced motion vector prediction mode. Each candidate predicted motion vector in the candidate predicted motion vector list used for the PU may indicate motion information, and the MV list may also be referred to as a candidate motion information list. Motion information indicated by some candidate predicted motion vectors in the candidate predicted motion vector list may be based on motion information for other PUs. If a candidate predicted motion vector indicates motion information of one of a specified spatial candidate predicted motion vector position or a specified temporal candidate predicted motion vector position, the candidate predicted motion vector may be referred to as an "original" candidate predicted motion vector in this application. For example, in a merge (Merge) mode, also referred to as a merge prediction mode in this specification, there may be five original spatial candidate predicted motion vector positions and one original temporal candidate predicted motion vector position. In some examples, the video encoder may generate an additional candidate predicted motion vector by combining some motion vectors from different original candidate predicted motion vectors, modifying the original candidate predicted motion vector, or inserting only a zero motion vector as the candidate predicted motion vector. The additional candidate predicted motion vectors are not considered as original candidate predicted motion vectors, and may be referred to as artificially generated candidate predicted motion vectors in this application.

The technologies in this application usually comprise a technology for generating a candidate predicted motion vector list on the video encoder and a technology for generating the same candidate predicted motion vector list on the video decoder. The video encoder and the video decoder may generate the same candidate predicted motion vector list by implementing a same technology for constructing the candidate predicted motion vector list. For example, the video encoder and the video decoder may construct lists with a same quantity of candidate predicted motion vectors (for example, five candidate predicted motion vectors). The video encoder and the video decoder may first consider spatial candidate predicted motion vectors (for example, adjacent blocks in a same picture) and then consider temporal candidate predicted motion vectors (for example, candidate predicted motion vectors in different pictures), and finally may consider artificially generated candidate predicted motion vectors, until a required quantity of candidate predicted motion vectors are added to the lists. According to the technology in this application, during construction of the candidate predicted motion vector list, a flag bit may be used to indicate one type of candidate predicted motion vectors in the candidate predicted motion vector list, so as to control a length of the candidate predicted motion vector list. For example, a spatial candidate predicted motion vector set and a temporal candidate predicted motion vector may be used as original candidate predicted motion vectors. When manually generated candidate predicted motion vectors are added to a candidate predicted motion vector list, a space of one flag bit may be added to the candidate predicted motion vector list, to indicate a set of candidate predicted motion vectors that are manually generated. During encoding and decoding, when a flag bit is selected, a predicted motion vector is selected from a candidate predicted motion vector set indicated by the flag bit.

After generating the candidate predicted motion vector list for the PU of the CU, the video encoder may select a candidate predicted motion vector from the candidate predicted motion vector list and output a candidate predicted motion vector index in a bitstream. The selected candidate predicted motion vector may be a candidate predicted motion vector for generating a motion vector that most closely matches a predictor of a target PU that is being decoded. The candidate predicted motion vector index may indicate a position of the selected candidate predicted motion vector in the candidate predicted motion vector list. The video encoder may further generate a prediction picture block for the PU based on a reference block indicated by the motion information for the PU. The motion information for the PU may be determined based on motion information indicated by the selected candidate predicted motion vector. For example, in the merge mode, the motion information for the PU may be the same as the motion information indicated by the selected candidate predicted motion vector. In the AMVP mode, the motion information for the PU may be determined based on a motion vector difference for the PU and the motion information indicated by the selected candidate predicted motion vector. The video encoder may generate one or more residual picture blocks for the CU based on the prediction picture block for the PU of the CU and an original picture block for the CU. Then, the video encoder may encode the one or more residual picture blocks and output the one or more residual picture blocks in the bitstream.

The bitstream may comprise data identifying the selected candidate predicted motion vector in the candidate predicted motion vector list for the PU. The data is referred to as an identifier or a signal in this specification. The data may comprise an index in the candidate predicted motion vector list, and the target motion vector is determined by using the index. Alternatively, it is determined, by using the index, that the target motion vector belongs to a specific type of candidate predicted motion vectors. In this case, the data further comprises information indicating a specific location of data of the selected candidate predicted motion vector in the type of candidate predicted motion vectors. The video decoder may parse the bitstream to obtain the data identifying the selected candidate predicted motion vector in the candidate predicted motion vector list for the PU, determine the data of the selected candidate predicted motion vector based on the data, and determine the motion information of the PU based on motion information indicated by the selected candidate predicted motion vector in the candidate predicted motion vector list for the PU. The video decoder may identify one or more reference blocks for the PU based on the motion information for the PU. After identifying the one or more reference blocks for the PU, the video decoder may generate the prediction picture block for the PU based on the one or more reference blocks for the PU. The video decoder may reconstruct the picture block for the CU based on the prediction picture block for the PU of the CU and the one or more residual picture blocks for the CU.

For ease of explanation, in this application, a position or a picture block may be described as having various spatial relationships with a CU or a PU. The description may be explained as follows: The position or the picture block has various spatial relationships with a picture block associated with the CU or the PU. In addition, in this application, a PU currently being decoded by the video decoder may be referred to as a current PU, and may also be referred to as a current to-be-processed picture block. In this application, a CU currently being decoded by the video decoder may be referred to as a current CU. In this application, a picture currently being decoded by the video decoder may be referred to as a current picture. It should be understood that this application is also applicable in a case in which a PU and a CU have a same size, or a PU is a CU. The PU is uniformly used for description.

As described briefly above, the video encoder 100 may generate the prediction picture block and the motion information for the PU of the CU through inter prediction. In many examples, motion information for a given PU may be the same as or similar to motion information for one or more adjacent PUs (namely, a PU whose picture block is spatially or temporally adjacent to a picture block of the given PU). Because the adjacent PU often has similar motion information, the video encoder 100 may encode the motion information for the given PU based on the motion information for the adjacent PU. Encoding the motion information for the given PU based on the motion information for the adjacent PU can reduce a quantity of coded bits required in the bitstream for indicating the motion information for the given PU.

The video encoder 100 may encode the motion information for the given PU based on the motion information for the adjacent PU in various manners. For example, the video encoder 100 may indicate that the motion information for the given PU is the same as the motion information for the adjacent PU. In this application, the merge mode may be used to indicate that the motion information for the given PU is the same as or may be derived from the motion information for the adjacent PU. In another feasible implementation, the video encoder 100 may calculate a motion vector difference (Motion Vector Difference, MVD) for the given PU. The MVD indicates a difference between a motion vector of the given PU and a motion vector of the adjacent PU. The video encoder 100 may comprise the MVD instead of the motion vector for the given PU in the motion information for the given PU. In the bitstream, a quantity of coded bits required for representing the MVD is less than a quantity of coded bits required for representing the motion vector for the given PU. In this application, the advanced motion vector prediction mode may be used to indicate that the motion information for the given PU is signaled to a decoder by using the MVD and an index value that is used for identifying a candidate motion vector.

To signal, in the merge mode or the AMVP mode, the motion information for the given PU to the decoder, the video encoder 100 may generate a candidate predicted motion vector list for the given PU. The candidate predicted motion vector list may comprise one or more candidate predicted motion vectors. Each of the candidate predicted motion vectors in the candidate predicted motion vector list for the given PU may specify motion information. The motion information indicated by each candidate predicted motion vector may comprise a motion vector, a reference picture index, and a prediction direction identifier. The candidate predicted motion vectors in the candidate predicted motion vector list may comprise "original" candidate predicted motion vectors, and each "original" candidate predicted motion vector indicates motion information of one of specified candidate predicted motion vector positions within a PU different from the given PU.

After generating the candidate predicted motion vector list for the PU, the video encoder 100 may select one candidate predicted motion vector from the candidate predicted motion vector list for the PU. For example, the video encoder may compare each candidate predicted motion vector with a PU being decoded and may select a candidate predicted motion vector with a desired rate-distortion cost. The video encoder 100 may output a candidate predicted motion vector index for the PU. The candidate predicted motion vector index may identify a position of the selected candidate predicted motion vector in the candidate predicted motion vector list.

In addition, the video encoder 100 may generate a prediction picture block for the PU based on a reference block indicated by the motion information for the PU. The motion information for the PU may be determined, based on motion information indicated by the selected candidate predicted motion vector in the candidate predicted motion vector list for the PU. For example, in the merge mode, the motion information for the PU may be the same as the motion information indicated by the selected candidate predicted motion vector. In the AMVP mode, the motion information for the PU may be determined based on the motion vector difference for the PU and the motion information indicated by the selected candidate predicted motion vector. As described above, the video encoder 100 may process the prediction picture block for the PU.

As described above, in the candidate predicted motion vector list, a flag bit may be used to indicate one type of candidate predicted motion vectors, so as to control a length of the candidate predicted motion vector list. Details are not described herein again.

When the video decoder 200 receives the bitstream, the video decoder 200 may generate a candidate predicted motion vector list for each PU of the CU. The candidate predicted motion vector list generated by the video decoder 200 for the PU may be the same as the candidate predicted motion vector list generated by the video encoder 100 for the PU. A syntax element obtained by the video decoder 200 by parsing the bitstream may indicate the position of the selected candidate predicted motion vector in the candidate predicted motion vector list for the PU. After generating the candidate predicted motion vector list for the PU, the video decoder 200 may generate the prediction picture block for the PU based on one or more reference blocks indicated by the motion information for the PU. The video decoder 200 may determine, based on the syntactic element obtained by parsing the bitstream, the motion information for the PU from motion information indicated by the selected candidate predicted motion vector in the candidate predicted motion vector list used for the PU. The video decoder 200 may reconstruct the picture block for the CU based on the prediction picture block for the PU and the residual picture block for the CU.

As described above, in the candidate predicted motion vector list, a flag bit may be used to indicate one type of candidate predicted motion vectors. In this case, after receiving the bitstream, the video decoder 200 first parses the bitstream to obtain a first identifier, and the first identifier indicates a location of the selected candidate predicted motion vector in the candidate predicted motion vector list of the PU. The candidate predicted motion vector list of the PU comprises at least one first candidate motion vector and at least one second candidate set, and the second candidate set comprises at least one second candidate motion vector. The video decoder 200 determines, from the candidate predicted motion vector list of the PU based on the first identifier, a target element corresponding to the first identifier. If the target element is the first candidate motion vector, the video decoder 200 determines the target element as the target motion vector of the PU, and predicts motion information of the to-be-processed picture block (PU) by using the target motion information, to perform a subsequent decoding procedure. If the target element is the second candidate set, the video decoder 200 parses the bitstream to obtain a second identifier, where the second identifier is used to identify a location of the selected candidate predicted motion vector in the second candidate set indicated by the first identifier. The video decoder 200 determines, based on the second identifier, the target motion information from a plurality of second candidate motion vectors in the second candidate set indicated by the first identifier, and predicts the motion information of the to-be-processed picture block (PU) by using the target motion information, to perform a subsequent decoding procedure.

As described above, in the candidate predicted motion vector list, a flag bit may be used to indicate one type of candidate predicted motion vectors. In this case, after receiving the bitstream, the video decoder 200 first parses the bitstream to obtain a first identifier, and the first identifier indicates a location of the selected candidate predicted motion vector in the candidate predicted motion vector list of the PU. The candidate predicted motion vector list of the PU comprises at least one first candidate motion vector and a plurality of second candidate motion information, the first candidate motion information comprises first motion information, and the second candidate motion information comprises a preset motion information offset. The video decoder 200 determines, from the candidate predicted motion vector list of the PU based on the first identifier, a target element corresponding to the first identifier. If the target element is the first candidate motion vector, the video decoder 200 determines the target element as the target motion vector of the PU, and predicts motion information of the to-be-processed picture block (PU) by using the target motion information, to perform a subsequent decoding procedure. If the target element is obtained based on the plurality of second candidate motion information, the video decoder 200 parses the bitstream to obtain a second identifier, determines target motion information based on the second identifier and one of the plurality of second candidate motion information, and predicts motion information of the to-be-processed picture block (PU) by using the target motion information, to perform a subsequent decoding procedure.

It should be noted that a candidate motion vector in the candidate predicted motion vector list may be obtained based on different modes. This is not specifically limited in this application.

It should be understood that, in a feasible implementation, on the decoder, constructing the candidate predicted motion vector list and parsing of the bitstream to obtain the position of the selected candidate predicted motion vector in the candidate predicted motion vector list are independent of each other, and may be performed in any order or in parallel.

In another feasible implementation, on the decoder, the position of the selected candidate predicted motion vector in the candidate predicted motion vector list is first obtained by parsing the bitstream, and then the candidate predicted motion vector list is constructed based on the position obtained through parsing. In this implementation, it is not necessary to construct all candidate predicted motion vector lists, and only a candidate predicted motion vector list in the position obtained through parsing needs to be constructed, to be specific, provided that the candidate predicted motion vector in the position can be determined. For example, when it is obtained, by parsing the bitstream, that the selected candidate predicted motion vector is a candidate predicted motion vector whose index is 3 in the candidate predicted motion vector list, only a candidate predicted motion vector list from an index 0 to the index 3 needs to be constructed, and the candidate predicted motion vector whose index is 3 can be determined. This can reduce complexity and improve decoding efficiency.

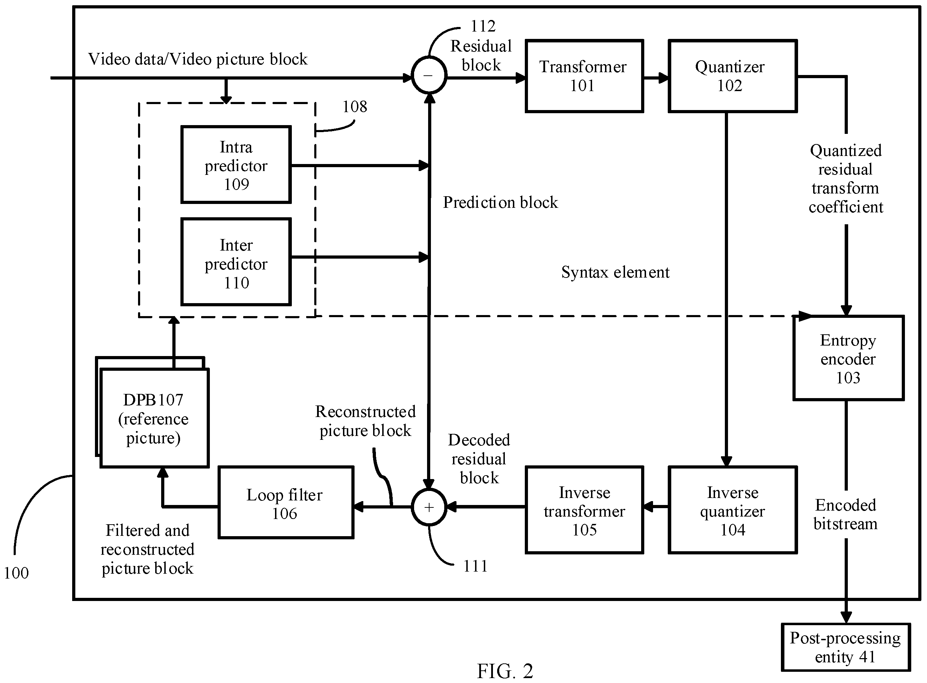

FIG. 2 is a block diagram of an example video encoder 100 according to an embodiment of this application. The video encoder 100 is configured to output a video to a post-processing entity 41. The post-processing entity 41 represents an example of a video entity capable of processing encoded video data that is from the video encoder 100. For example, the video entity is a media aware network element (MANE) or a stitching apparatus/an editing apparatus. In some cases, the post-processing entity 41 may be an example of a network entity. In some video coding systems, the post-processing entity 41 and the video encoder 100 may be components of separate apparatuses. However, in another case, functions described with respect to the post-processing entity 41 may be implemented by a same apparatus including the video encoder 100. In an example, the post-processing entity 41 is an example of the storage apparatus 40 in FIG. 1.

In the example in FIG. 2, the video encoder 100 comprises a prediction processing unit 108, a filter unit 106, a decoded picture buffer (decoded picture buffer, DPB) 107, a summator 112, a transformer 101, a quantizer 102, and an entropy encoder 103. The prediction processing unit 108 comprises an inter predictor 110 and an intra predictor 109. For picture block reconstruction, the video encoder 100 further comprises an inverse quantizer 104, an inverse transformer 105, and a summator 111. The filter unit 106 is intended to represent one or more loop filters, for example, a deblocking filter, an adaptive loop filter (adaptive loop filter, ALF), and a sample adaptive offset (sample adaptive offset, SAO) filter. Although the filter unit 106 is shown as an in-loop filter in FIG. 2, in another implementation, the filter unit 106 may be implemented as a post-loop filter. In an example, the video encoder 100 may further comprise a video data memory and a partitioning unit (not shown in the figure).

The video data memory may store video data encoded by a component of the video encoder 100. The video data stored in the video data memory may be obtained from a video source 120. The DPB 107 may be a reference image memory that stores reference video data used by the video encoder 100 to encode the video data in an intra or inter coding mode. The video data memory and the DPB 107 may comprise any one of a plurality of types of memory apparatuses, for example, a dynamic random access memory (dynamic random access memory, DRAM) including a synchronous dynamic random access memory (synchronous dynamic random access memory, SDRAM), a magnetic RAM (magnetic random access memory, MRAM), a resistive RAM (resistive random access memory, RRAM), or another type of memory apparatus. The video data memory and the DPB 107 may be provided by a same memory apparatus or separate memory apparatuses. In various examples, the video data memory may be integrated onto a chip together with other components of the video encoder 100, or may be disposed outside the chip relative to those components.

As shown in FIG. 2, the video encoder 100 receives video data and stores the video data into the video data memory. The partitioning unit partitions the video data into several picture blocks, and these picture blocks may be further partitioned into smaller blocks, for example, partitioned based on a quadtree structure or a binary-tree structure. The partitioning may further comprise partitioning into slices (slice), tiles (tile), or other larger units. The video encoder 100 is usually a component for encoding a picture block in a to-be-encoded video slice. The slice may be partitioned into a plurality of picture blocks (and may be partitioned into picture block sets that are referred to as tiles). The prediction processing unit 108 may select one of a plurality of possible coding modes used for a current picture block, for example, one of a plurality of intra coding modes or one of a plurality of inter coding modes. The prediction processing unit 108 may provide obtained intra-coded/decoded and inter-coded/decoded blocks to the summator 112 to generate a residual block, and provide the blocks to the summator 111 to reconstruct an encoded block used as a reference image.

The intra predictor 109 in the prediction processing unit 108 may perform intra predictive encoding on a to-be-encoded current picture block relative to one or more neighboring blocks that are in a same frame or slice as the current picture block, to remove spatial redundancy. The inter predictor 110 in the prediction processing unit 108 may perform inter predictive encoding on the current picture block relative to one or more prediction blocks in one or more reference images, to remove temporal redundancy.

Specifically, the inter predictor 110 may be configured to determine an inter prediction mode used to encode the current picture block. For example, the inter predictor 110 may calculate, through rate-distortion analysis, rate-distortion values of various inter prediction modes in a candidate inter prediction mode set, and select an inter prediction mode with an optimal rate-distortion feature from the inter prediction modes. Rate-distortion analysis is usually used to determine an amount of distortion (or error) between an encoded block and an original block that has not been encoded and that is to be encoded to generate the encoded block, and a bit rate (namely, a quantity of bits) used to generate the encoded block. For example, the inter predictor 110 may determine, in the candidate inter prediction mode set, an inter prediction mode that has a smallest rate-distortion cost and that is used to encode the current picture block, as the inter prediction mode used to perform inter prediction on the current picture block.

The inter predictor 110 is configured to predict the motion information (for example, a motion vector) of the one or more subblocks in the current picture block based on the determined inter prediction mode, and obtain or generate a prediction block of the current picture block by using the motion information (for example, the motion vector) of the one or more subblocks in the current picture block. The inter predictor 110 may locate, in one reference image in a reference image list, the prediction block to which the motion vector points. The inter predictor 110 may further generate a syntax element associated with a picture block and a video slice, so that a video decoder 200 uses the syntax element to decode the picture block of the video slice. Alternatively, in an example, the inter predictor 110 performs a motion compensation process by using motion information of each subblock, to generate a prediction block of the subblock, thereby obtaining the prediction block of the current picture block. It should be understood that the inter predictor 110 herein performs a motion estimation process and the motion compensation process.

Specifically, after selecting the inter prediction mode for the current picture block, the inter predictor 110 may provide, to the entropy encoder 103, information indicating the selected inter prediction mode of the current picture block, so that the entropy encoder 103 encodes the information indicating the selected inter prediction mode.

The intra predictor 109 may perform intra prediction on the current picture block. Specifically, the intra predictor 109 may determine an intra prediction mode used to encode the current block. For example, the intra predictor 109 may calculate bit rate-distortion values for various to-be-tested intra prediction modes through bit rate-distortion analysis, and select an intra prediction mode with an optimal bit rate-distortion characteristic from the to-be-tested modes. In any case, after selecting the intra prediction mode for the picture block, the intra predictor 109 may provide, to the entropy encoder 103, information indicating the selected intra prediction mode of the current picture block, so that the entropy encoder 103 encodes the information indicating the selected intra prediction mode.

After the prediction processing unit 108 generates the prediction block of the current picture block through inter prediction and intra prediction, the video encoder 100 subtracts the prediction block from the current to-be-encoded picture block to form a residual picture block. The summator 112 represents one or more components that perform the subtraction operation. Residual video data in the residual block may be comprised in one or more transform units (transform unit, TU), and applied to the transformer 101. The transformer 101 transforms the residual video data into a residual transform coefficient through transform such as discrete cosine transform (discrete cosine transform, DCT) or conceptually similar transform. The transformer 101 may convert the residual video data from pixel value domain to transform domain, for example, frequency domain.

The transformer 101 may send the obtained transform coefficient to the quantizer 102. The quantizer 102 quantizes the transform coefficient to further reduce the bit rate. In some examples, the quantizer 102 may further scan a matrix including a quantized transform coefficient. Alternatively, the entropy encoder 103 may perform scanning.

After quantization, the entropy encoder 103 performs entropy encoding on the quantized transform coefficient. For example, the entropy encoder 103 may perform context-adaptive variable-length coding (CAVLC), context-adaptive binary arithmetic coding (CABAC), syntax-based context-adaptive binary arithmetic coding (SBAC), probability interval partitioning entropy (PIPE) coding, or another entropy coding method or technology. After the entropy encoder 103 performs entropy encoding, an encoded bitstream may be transmitted to the video decoder 200, or archived for subsequent transmission or to be retrieved by the video decoder 200. The entropy encoder 103 may further perform entropy encoding on a syntax element of the to-be-encoded current picture block.

The inverse quantizer 104 and the inverse transformer 105 respectively apply inverse quantization and inverse transform, to reconstruct the residual block in pixel domain, for example, to be subsequently used as a reference block of the reference image. The summator 111 adds a reconstructed residual block to the prediction block generated by the inter predictor 110 or the intra predictor 109, to generate a reconstructed picture block. The filter unit 106 is applicable to the reconstructed picture block to reduce distortion such as blocking artifacts (block artifacts). Then, the reconstructed picture block is stored as the reference block in the decoded image buffer 107, and may be used by the inter predictor 110 as the reference block to perform inter prediction on a block in a subsequent video frame or image.

It should be understood that another structural variant of the video encoder 100 may be used to encode a video stream. For example, for some picture blocks or image frames, the video encoder 100 may directly quantize a residual signal, and correspondingly, processing by the transformer 101 and the inverse transformer 105 is not required. Alternatively, for some picture blocks or image frames, the video encoder 100 does not generate residual data, and correspondingly, processing by the transformer 101, the quantizer 102, the inverse quantizer 104, and the inverse transformer 105 is not required. Alternatively, the video encoder 100 may directly store the reconstructed picture block as the reference block, without processing by the filter unit 106. Alternatively, the quantizer 102 and the inverse quantizer 104 in the video encoder 100 may be combined.

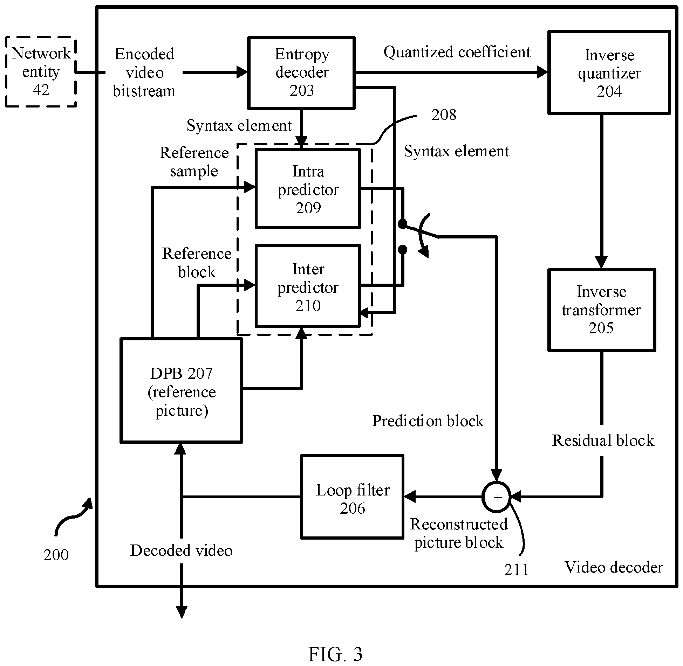

FIG. 3 is a block diagram of an example video decoder 200 according to an embodiment of this application. In the example in FIG. 3, the video decoder 200 comprises an entropy decoder 203, a prediction processing unit 208, an inverse quantizer 204, an inverse transformer 205, a summator 211, a filter unit 206, and a DPB 207. The prediction processing unit 208 may comprise an inter predictor 210 and an intra predictor 209. In some examples, the video decoder 200 may perform a decoding process that is substantially inverse to the encoding process described with respect to the video encoder 100 in FIG. 2.

During decoding, the video decoder 200 receives, from the video encoder 100, an encoded video bitstream that represents a picture block of an encoded video slice and an associated syntactic element. The video decoder 200 may receive video data from a network entity 42, and optionally, may further store the video data in a video data memory (which is not shown in the figure). The video data memory may store video data that is to be decoded by a component of the video decoder 200, for example, the encoded video bitstream. The video data stored in the video data memory may be obtained from, for example, a local video source such as the storage apparatus 40 or a camera through wired or wireless network communication of the video data, or by accessing a physical data storage medium. The video data memory may be used as a decoded picture buffer (DPB) configured to store encoded video data that is from the encoded video bitstream. Therefore, although the video data memory is not shown in FIG. 3, the video data memory and the DPB 207 may be a same memory, or may be memories that are separately disposed. The video data memory and the DPB 207 each may be constituted by any one of a plurality of memory apparatuses, for example, a dynamic random access memory (DRAM) including a synchronous DRAM (SDRAM), a magnetoresistive RAM (MRAM), a resistive RAM (RRAM), or another type of memory apparatus. In various examples, the video data memory may be integrated onto a chip together with other components of the video decoder 200, or may be disposed outside the chip relative to those components.

The network entity 42 may be, for example, a server, a MANE, a video editor/clipper, or another apparatus configured to implement one or more of the technologies described above. The network entity 42 may or may not comprise a video encoder, for example, the video encoder 100. Before the network entity 42 sends the encoded video bitstream to the video decoder 200, the network entity 42 may implement a part of the technology described in this application. In some video decoding systems, the network entity 42 and the video decoder 200 may be components of separate apparatuses. In another case, functions described with respect to the network entity 42 may be implemented by a same apparatus including the video decoder 200. In some cases, the network entity 42 may be an example of the storage apparatus 40 in FIG. 1.

The entropy decoder 203 of the video decoder 200 performs entropy decoding on the bitstream to generate a quantized coefficient and some syntax elements. The entropy decoder 203 forwards the syntax elements to the prediction processing unit 208. The video decoder 200 may receive syntactic elements/a syntactic element at a video slice level and/or a picture block level.

When the video slice is decoded into an intra-decoded (I) slice, the intra predictor 209 of the prediction processing unit 208 may generate a prediction block of the picture block of the current video slice based on a signaled intra prediction mode and data of a previously decoded block of a current frame or image. When the video slice is decoded into an inter-decoded (in other words, B or P) slice, the inter predictor 210 of the prediction processing unit 208 may determine, based on the syntax element received from the entropy decoder 203, an inter prediction mode used to decode a current picture block of the current video slice, and decode (for example, perform inter prediction on) the current picture block based on the determined inter prediction mode. Specifically, the inter predictor 210 may determine whether to use a new inter prediction mode to predict the current picture block of the current video slice. If the syntax element indicates to use the new inter prediction mode to predict the current picture block, the inter predictor 210 predicts motion information of the current picture block of the current video slice or motion information of a subblock of the current picture block based on the new inter prediction mode (for example, a new inter prediction mode indicated by the syntax element or a default new inter prediction mode), to obtain or generate a prediction block for the current picture block or the subblock of the current picture block based on the predicted motion information of the current picture block or the predicted motion information of the subblock of the current picture block by using a motion compensation process. The motion information herein may comprise reference picture information and a motion vector. The reference picture information may comprise but is not limited to unidirectional/bidirectional prediction information, a reference picture list number, and a reference picture index corresponding to a reference picture list. For inter prediction, the prediction block may be generated from one of reference pictures in one of reference picture lists. The video decoder 200 may construct reference picture lists, namely, a list 0 and a list 1, based on reference pictures stored in the DPB 207. A reference frame index of the current picture may be comprised in one of or both a reference frame list 0 and a reference frame list 1. In some examples, the video encoder 100 may signal to indicate whether to decode a specific syntax element of a specific block by using the new inter prediction mode, or may signal to indicate whether to use the new inter prediction mode and indicate which new inter prediction mode is specifically used to decode a specific syntax element of a specific block. It should be understood that the inter predictor 210 herein performs the motion compensation process.

The inverse quantizer 204 performs inverse quantization on, in other words, dequantizes, a quantized transform coefficient provided in the bitstream and decoded by the entropy decoder 203. An inverse quantization process may comprise: determining a to-be-applied quantization degree by using a quantization parameter calculated by the video encoder 100 for each picture block in the video slice, and similarly determining a to-be-applied inverse quantization degree. The inverse transformer 205 applies inverse transform, for example, inverse DCT, inverse integer transform, or a conceptually similar inverse transform process, to the transform coefficient, to generate a pixel-domain residual block.

After the inter predictor 210 generates the prediction block used for the current picture block or the sub-block of the current picture block, the video decoder 200 summates the residual block from the inverse transformer 205 and the corresponding prediction block generated by the inter predictor 210, to obtain a reconstructed block, in other words, a decoded picture block. The summator 211 represents a component that performs the summation operation. When necessary, a loop filter (in or after a decoding loop) may be further used to smoothen pixels, or video quality may be improved in another manner. The filter unit 206 may represent one or more loop filters, for example, a deblocking filter, an adaptive loop filter (ALF), and a sample adaptive offset (SAO) filter. Although the filter unit 206 is shown as an in-loop filter in FIG. 3, in another implementation, the filter unit 206 may be implemented as a post-loop filter. In an example, the filter unit 206 is applicable to block reconstruction to reduce block distortion, and this result is output as a decoded video stream. In addition, a decoded picture block in a given frame or picture may further be stored in the decoded picture buffer 207, and the DPB 207 stores a reference image used for subsequent motion compensation. The DPB 207 may be a component of the memory, and may further store a decoded video for subsequent presentation on a display apparatus (for example, the display apparatus 220 in FIG. 1); or may be separated from such type of memory.

It should be understood that another structural variant of the video decoder 200 may be used to decode the encoded video bitstream. For example, the video decoder 200 may generate an output video stream, without processing by the filter unit 206. Alternatively, for some picture blocks or image frames, the entropy decoder 203 of the video decoder 200 does not obtain a quantized coefficient through decoding, and correspondingly, processing by the inverse quantizer 204 and the inverse transformer 205 is not required.

As described above, the technologies in this application relate to, for example, inter decoding. It should be understood that the technologies in this application may be performed by any video decoder described in this application, and the video decoder comprises (for example) the video encoder 100 and the video decoder 200 shown and described in FIG. 1 to FIG. 3. In other words, in a feasible implementation, the inter predictor 110 described with reference to FIG. 2 may perform, when performing inter prediction during encoding on a block of video data, a particular technology described below. In another feasible implementation, the inter predictor 210 described with reference to FIG. 3 may perform, when performing inter prediction during decoding on a block of video data, a particular technology described below. Therefore, a reference to a general "video encoder" or "video decoder" may comprise the video encoder 100, the video decoder 200, or another video encoding unit or encoding unit.

It should be understood that, in the video encoder 100 and the video decoder 200 in this application, a processing result for a procedure may be output to a next procedure after being further processed. For example, after a procedure such as interpolation filtering, motion vector derivation, or loop filtering, an operation such as clipping or shift is further performed on a processing result for the corresponding procedure.

For example, a motion vector that is of a control point of a current picture block and that is derived based on a motion vector of a neighboring affine coding block may be further processed. This is not limited in this application. For example, a value of the motion vector is constrained to be within a specific bit width range. Assuming that an allowed bit width of the motion vector is bitDepth, the value of the motion vector ranges from $-2^{(bitDepth - 1)}$ to $2^{(bitDepth - 1)} - 1$, where the symbol "^" represents exponentiation. If bitDepth is 16, the value ranges from -32768 to 32767. If bitDepth is 18, the value ranges from -131072 to 131071. The value of the motion vector may be constrained in either of the following two manners:

Manner 1: An overflow most significant bit of the motion vector is removed:

$$ux = ( vx + 2^{bitDepth} ) \% 2^{bitDepth}$$

$$vx = ( ux >= 2^{bitDepth-1} ) \; ? \; (ux - 2^{bitDepth}) : ux$$

$$uy = ( vy + 2^{bitDepth} ) \; \% \; 2^{bitDepth}$$

$$vy = ( uy >= 2^{bitDepth-1} ) \; ? \; (uy - 2^{bitDepth}) : uy$$

For example, a value of vx is -32769, and 32767 is derived according to the foregoing formulas. A value is stored on a computer in a two's complement representation, a two's complement representation of -32769 is 1,0111,1111,1111,1111 (17 bits), and processing performed by the computer for overflowing is discarding a most significant bit. Therefore, a value of vx is 0111,1111,1111,1111, that is, 32767. This value is consistent with the result derived through processing according to the formulas.

Manner 2: Clipping is performed on the motion vector, and the following formulas are used:

$$vx = Clip3(-2^{bitDepth-1}, 2^{bitDepth-1} - 1, vx)$$

$$vy = Clip3(-2^{bitDepth-1}, 2^{bitDepth-1} - 1, vy)$$

In the foregoing formulas, Clip3 is defined as clipping a value of z to a range [x, y].

$$Clip3(x, y, z) = \begin{cases} x; & z < x \\ y; & z > y \\ z; & otherwise \end{cases}$$

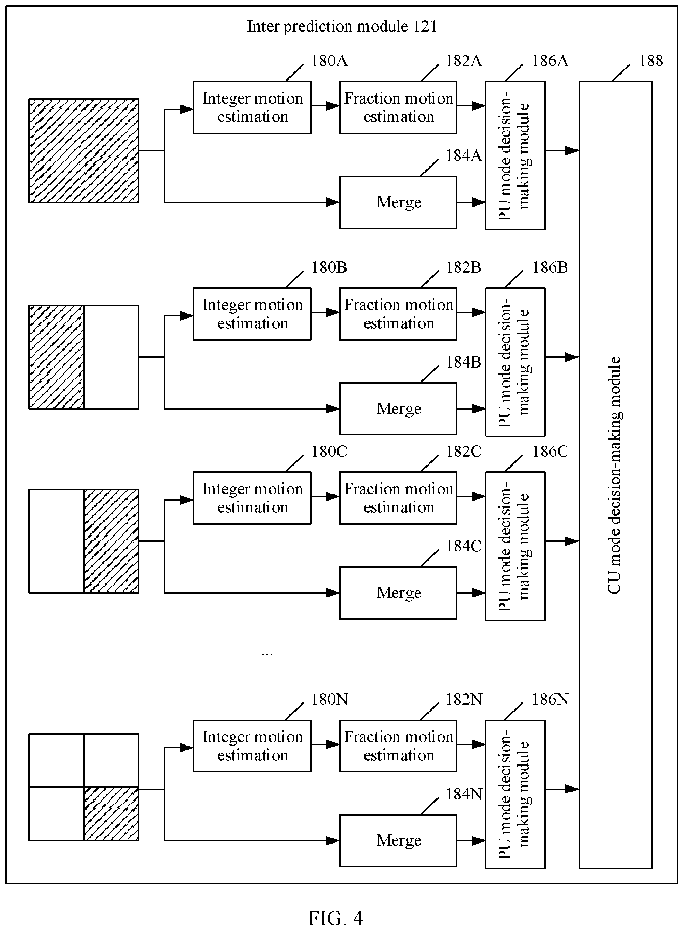

FIG. 4 is a schematic block diagram of an inter prediction module 121 according to an embodiment of this application. The inter prediction module 121, for example, may comprise a motion estimation unit and a motion compensation unit. A relationship between a PU and a CU varies with a video compression coding standard. The inter prediction module 121 may partition a current CU into PUs according to a plurality of partitioning patterns. For example, the inter prediction module 121 may partition the current CU into the PUs according to 2N x 2N, 2N x N, N x 2N, and N x N partitioning patterns. In another embodiment, the current CU is a current PU. This is not limited.

The inter prediction module 121 may perform integer motion estimation (Integer Motion Estimation, IME) and then fraction motion estimation (Fraction Motion Estimation, FME) on each PU. When the inter prediction module 121 performs IME on the PU, the inter prediction module 121 may search one or more reference pictures for a reference block for the PU. After finding the reference block for the PU, the inter prediction module 121 may generate a motion vector that indicates, with integer precision, a spatial displacement between the PU and the reference block for the PU. When the inter prediction module 121 performs FME on the PU, the inter prediction module 121 may improve the motion vector generated by performing IME on the PU. A motion vector generated by performing FME on the PU may have sub-integer precision (for example, 1/2 pixel precision or 1/4 pixel precision). After generating the motion vector for the PU, the inter prediction module 121 may generate a prediction picture block for the PU by using the motion vector for the PU.

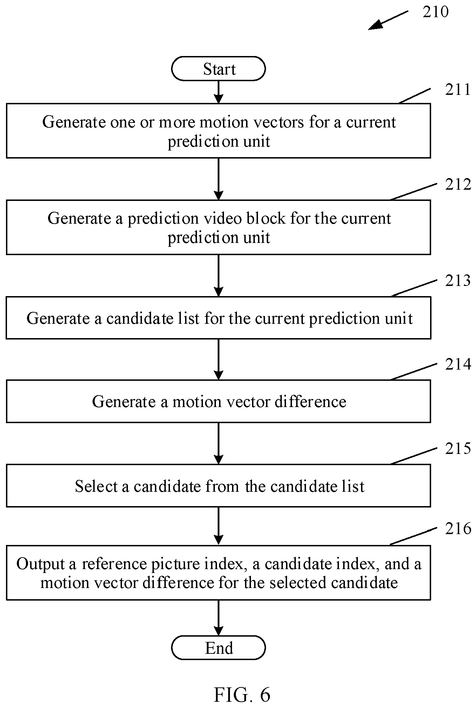

In some feasible implementations in which the inter prediction module 121 signals motion information for the PU to a decoder in an AMVP mode, the inter prediction module 121 may generate a candidate predicted motion vector list for the PU. The candidate predicted motion vector list may comprise one or more original candidate predicted motion vectors and one or more additional candidate predicted motion vectors derived from the one or more original candidate predicted motion vectors. After generating the candidate predicted motion vector list for the PU, the inter prediction module 121 may select a candidate predicted motion vector from the candidate predicted motion vector list and generate a motion vector difference (MVD) for the PU. The MVD for the PU may indicate a difference between a motion vector indicated by the selected candidate predicted motion vector and the motion vector generated for the PU through IME and FME. In these feasible implementations, the inter prediction module 121 may output a candidate predicted motion vector index identifying a position of the selected candidate predicted motion vector in the candidate predicted motion vector list. The inter prediction module 121 may further output the MVD for the PU. The following describes in detail a feasible implementation of the advanced motion vector prediction (AMVP) mode in FIG. 6 in this embodiment of this application.

In addition to performing IME and FME on the PU to generate the motion information for the PU, the inter prediction module 121 may further perform a merge (Merge) operation on the PU. When the inter prediction module 121 performs the merge operation on the PU, the inter prediction module 121 may generate a candidate predicted motion vector list for the PU. The candidate predicted motion vector list for the PU may comprise the one or more original candidate predicted motion vectors and the one or more additional candidate predicted motion vectors derived from the one or more original candidate predicted motion vectors. The original candidate predicted motion vectors in the candidate predicted motion vector list may comprise one or more spatial candidate predicted motion vectors and temporal candidate predicted motion vectors. The spatial candidate predicted motion vector may indicate motion information for another PU in a current picture. The temporal candidate predicted motion vector may be based on motion information for a corresponding PU in a picture different from the current picture. The temporal candidate predicted motion vector may also be referred to as temporal motion vector prediction (TMVP).

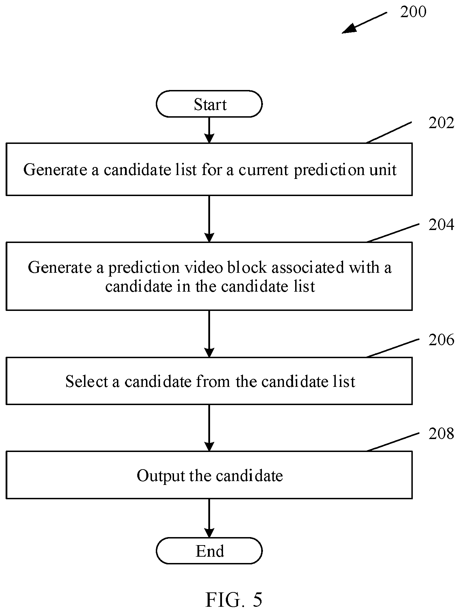

After generating the candidate predicted motion vector list, the inter prediction module 121 may select one candidate predicted motion vector from the candidate predicted motion vector list. Then, the inter prediction module 121 may generate a prediction picture block for the PU based on the reference block indicated by the motion information for the PU. In the merge mode, the motion information for the PU may be the same as motion information indicated by the selected candidate predicted motion vector. FIG. 5 described below is a flowchart of an example of the merge mode.

According to the technology in this application, during construction of the candidate predicted motion vector list, an original candidate predicted motion vector may be directly comprised in the candidate predicted motion vector list, and a flag bit may be used to indicate one type of additional candidate predicted motion vectors, so as to control a length of the candidate predicted motion vector list. Particularly, different types of additional candidate predicted motion vectors are indicated by using different flag bits. During encoding and decoding, when a flag bit is selected, a predicted motion vector is selected from a candidate predicted motion vector set indicated by the flag bit. The candidate predicted motion vector indicated by the flag bit may be a preset motion information offset.

After generating the prediction picture block for the PU through IME and FME and generating the prediction picture block for the PU through the merge operation, the inter prediction module 121 may select the prediction picture block generated by performing the FME operation or the prediction picture block generated by performing the merge operation. In some feasible implementations, the inter prediction module 121 may select the prediction picture block for the PU by analyzing rate-distortion costs of the prediction picture block generated by performing the FME operation and the prediction picture block generated by performing the merge operation.

After the inter prediction module 121 has selected a prediction picture block of a PU generated by partitioning the current CU according to each partitioning pattern (in some implementations, after a coding tree unit CTU is partitioned into CUs, the CU is not further partitioned into smaller PUs, and in this case, the PU is equivalent to the CU), the inter prediction module 121 may select a partitioning pattern for the current CU. In some implementations, the inter prediction module 121 may select the partitioning pattern for the current CU by analyzing a rate-distortion cost of the selected prediction picture block of the PU generated by partitioning the current CU according to each partitioning pattern. The inter prediction module 121 may output a prediction picture block associated with a PU that belongs to the selected partitioning pattern to a residual generation module 102. The inter prediction module 121 may output a syntax element of motion information for the PU that belongs to the selected partitioning pattern to an entropy coding module.

In the schematic diagram shown in FIG. 4, the inter prediction module 121 comprises IME modules 180A to 180N (collectively referred to as an "IME module 180"), FME modules 182A to 182N (collectively referred to as an "FME module 182"), merge modules 184A to 184N (collectively referred to as a "merge module 184"), PU pattern decision-making modules 186A to 186N (collectively referred to as a "PU pattern decision-making module 186"), and a CU pattern decision-making module 188 (and may further perform a CTU-to-CU pattern decision-making process).

The IME module 180, the FME module 182, and the merge module 184 may respectively perform an IME operation, an FME operation, and a merge operation on the PU of the current CU. In the schematic diagram shown in FIG. 4, the inter prediction module 121 is described as including a separate IME module 180, a separate FME module 182, and a separate merge module 184 for each PU in each partitioning pattern for the CU. In another feasible implementation, the inter prediction module 121 does not comprise the separate IME module 180, the separate FME module 182, or the separate merge module 184 for each PU in each partitioning pattern of the CU.

As illustrated in the schematic diagram in FIG. 4, the IME module 180A, the FME module 182A, and the merge module 184A may respectively perform an IME operation, an FME operation, and a merge operation on a PU generated by partitioning the CU in the 2N x 2N partitioning mode. The PU mode decision-making module 186A may select one of prediction picture blocks generated by the IME module 180A, the FME module 182A, and the merge module 184A.

The IME module 180B, the FME module 182B, and the merge module 184B may respectively perform an IME operation, an FME operation, and a merge operation on the left PU generated by partitioning the CU in the N x 2N partitioning mode. The PU mode decision-making module 186B may select one of prediction picture blocks generated by the IME module 180B, the FME module 182B, and the merge module 184B.

The IME module 180C, the FME module 182C, and the merge module 184C may respectively perform an IME operation, an FME operation, and a merge operation on the right PU generated by partitioning the CU in the N x 2N partitioning mode. The PU mode decision-making module 186C may select one of prediction picture blocks generated by the IME module 180C, the FME module 182C, and the merge module 184C.

The IME module 180N, the FME module 182N, and the merge module 184 may respectively perform an IME operation, an FME operation, and a merge operation on the lower-right PU generated by partitioning the CU in the N x N partitioning mode. The PU mode decision-making module 186N may select one of prediction picture blocks generated by the IME module 180N, the FME module 182N, and the merge module 184N.

The PU pattern decision-making module 186 may select a prediction picture block by analyzing rate-distortion costs of a plurality of possible prediction picture blocks, and select a prediction picture block that provides an optimal rate-distortion cost in a given decoding scenario. For example, for an application with limited bandwidth, the PU mode decision-making module 186 may prefer a prediction picture block for which a compression ratio is increased, and for another application, the PU mode decision-making module 186 may prefer a prediction picture block for which quality of a reconstructed video is improved. After the PU pattern decision-making module 186 selects prediction picture blocks for the PUs of the current CU, the CU pattern decision-making module 188 selects the partitioning pattern for the current CU and outputs the prediction picture block and motion information for the PU that belongs to the selected partitioning pattern.

FIG. 5 is a flowchart of an implementation of a merge mode according to an embodiment of this application. A video encoder (for example, the video encoder 20) may perform a merge operation 200. The merge operation 200 may comprise: 202: Generate a candidate list for a current prediction unit. 204: Generate a prediction video block associated with a candidate in the candidate list. 206: Select a candidate from the candidate list. 208: Output the candidate. The candidate is a candidate motion vector or candidate motion information.

In another feasible implementation, the video encoder may perform a merge operation different from the merge operation 200. For example, in another feasible implementation, the video encoder may perform a merge operation, where the video encoder performs steps more or less than steps of the merge operation 200 or steps different from the steps of the merge operation 200. In another feasible implementation, the video encoder may perform the steps of merge operation 200 in different orders or in parallel. The encoder may further perform the merge operation 200 on a PU encoded in a skip (skip) mode.

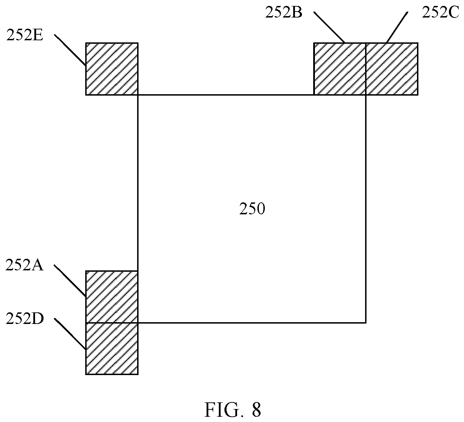

After the video encoder starts the merge operation 200, the video encoder may generate a candidate predicted motion vector list for a current PU (202). The video encoder may generate the candidate predicted motion vector list for the current PU in various manners. For example, the video encoder may generate, according to one of example technologies described below with respect to FIG. 8 to FIG. 12, the candidate predicted motion vector list for the current PU. According to the technology in this application, the candidate predicted motion vector list used for the current PU comprises at least one first candidate motion vector and an identifier of at least one second candidate motion vector set.

As described above, the candidate predicted motion vector list for the current PU may comprise a temporal candidate predicted motion vector. The temporal candidate predicted motion vector may indicate motion information for a corresponding time-domain co-located (co-located) PU. The co-located PU may be spatially located at a same position as the current PU in a picture frame, but in a reference picture instead of a current picture. In this application, the reference picture including the corresponding temporal PU may be referred to as a related reference picture. In this application, a reference picture index of the associated reference picture may be referred to as an associated reference picture index. As described above, the current picture may be associated with one or more reference picture lists (for example, a list 0 and a list 1). The reference picture index may indicate the reference picture by indicating a position of the reference picture in a reference picture list. In some feasible implementations, the current picture may be associated with a combined reference picture list.

In some video encoders, the related reference picture index is a reference picture index for a PU that covers a reference index source position associated with the current PU. In these video encoders, the reference index source position associated with the current PU is adjacent to the left of the current PU or adjacent to the top of the current PU. In this application, if a picture block associated with a PU comprises a specific position, the PU may "cover" the specific position. In these video encoders, the video encoder may use a reference picture index 0 if the reference index source position is unavailable.

However, in some examples, the reference index source position associated with the current PU is within a current CU. In these examples, a PU that covers the reference index source position associated with the current PU may be considered as available if the PU is above or on the left of the current CU. In this case, the video encoder may need to access motion information for another PU of the current CU to determine the reference picture including the co-located PU. Therefore, these video encoders may use motion information (for example, a reference picture index) for a PU belonging to the current CU to generate the temporal candidate predicted motion vector for the current PU. In other words, these video encoders may use the motion information for the PU belonging to the current CU to generate the temporal candidate predicted motion vector. Therefore, the video encoder may not be able to generate, in parallel, candidate predicted motion vector lists for the current PU and the PU that covers the reference index source position associated with the current PU.

The video encoder may explicitly set the related reference picture index without referring to a reference picture index for any other PU. In this way, the video encoder can generate, in parallel, candidate predicted motion vector lists for the current PU and another PU of the current CU. Because the video encoder explicitly sets the related reference picture index, the related reference picture index is not based on motion information for any other PU of the current CU. In some feasible implementations in which the video encoder explicitly sets the related reference picture index, the video encoder may always set the related reference picture index to a fixed preset reference picture index (for example, 0). In this way, the video encoder may generate a temporal candidate predicted motion vector based on motion information for a co-located PU in a reference frame indicated by the preset reference picture index, where the temporal candidate predicted motion vector may be comprised in a candidate predicted motion vector list for the current CU.

In a feasible implementation in which the video encoder explicitly sets the related reference picture index, the video encoder may explicitly signal the related reference picture index in a syntax structure (for example, a picture header, a slice header, an APS, or another syntax structure). In this feasible implementation, the video encoder may signal a related reference picture index for each LCU (namely, a CTU), CU, PU, TU, or sub-block of another type to a decoder. For example, the video encoder may signal that a related reference picture index for each PU of the CU is equal to "1".

In some feasible implementations, the related reference picture index may be set implicitly rather than explicitly. In these feasible implementations, the video encoder may generate each temporal candidate predicted motion vector in the candidate predicted motion vector list for the PU of the current CU by using motion information for a PU in a reference picture indicated by a reference picture index for a PU that covers positions outside the current CU, even if these positions are not strictly adjacent to the current PU.

After generating the candidate predicted motion vector list for the current PU, the video encoder may generate a prediction picture block associated with a candidate predicted motion vector in the candidate predicted motion vector list (204). The video encoder may determine motion information for the current PU based on motion information of an indicated candidate predicted motion vector and then generate a prediction picture block based on one or more reference blocks indicated by the motion information for the current PU, to generate a prediction picture block associated with the candidate predicted motion vector. Then, the video encoder may select one candidate predicted motion vector from the candidate predicted motion vector list (206). The video encoder may select the candidate predicted motion vector in various manners. For example, the video encoder may select one candidate predicted motion vector by analyzing a rate-distortion cost of each prediction picture block associated with candidate predicted motion vectors.

After selecting the candidate predicted motion vector, the video encoder may output a candidate predicted motion vector index (208). The candidate predicted motion vector index may indicate a position of the selected candidate predicted motion vector in the candidate predicted motion vector list. In some feasible implementations, the candidate predicted motion vector index may be represented as "merge_idx".

FIG. 6 is a flowchart of an implementation of an advanced motion vector prediction (AMVP) mode according to an embodiment of this application. A video encoder (for example, the video encoder 20) may perform an AMVP operation 210. The AMVP operation 210 may comprise: 211: Generate one or more motion vectors for a current prediction unit. 212: Generate a prediction video block for the current prediction unit. 213: Generate a candidate list used for the current prediction unit 214: Generate a motion vector difference. 215: Select a candidate from the candidate list. 216: Output a reference picture index, a candidate index, and a motion vector difference used to select the candidate. The candidate is a candidate motion vector or candidate motion information.

After the video encoder starts the AMVP operation 210, the video encoder may generate one or more motion vectors for a current PU (211). The video encoder may perform integer motion estimation and fraction motion estimation to generate the motion vector for the current PU. As described above, a current picture may be associated with two reference picture lists (a list 0 and a list 1). If the current PU is predicted unidirectionally, the video encoder may generate a list-0 motion vector or a list-1 motion vector for the current PU. The list-0 motion vector may indicate a spatial displacement between a picture block corresponding to the current PU and a reference block in a reference picture in the list 0. The list-1 motion vector may indicate a spatial displacement between the picture block corresponding to the current PU and a reference block in a reference picture in the list 1. If the current PU is predicted bidirectionally, the video encoder may generate the list-0 motion vector and the list-1 motion vector for the current PU.

After generating the one or more motion vectors for the current PU, the video encoder may generate a prediction picture block for the current PU (212). The video encoder may generate the prediction picture block for the current PU based on one or more reference blocks indicated by the one or more motion vectors for the current PU.

In addition, the video encoder may generate a candidate predicted motion vector list for the current PU (213). The video decoder may generate the candidate predicted motion vector list for the current PU in various manners. For example, the video encoder may generate the candidate predicted motion vector list for the current PU according to one or more of feasible implementations described below with respect to FIG. 8 to FIG. 12. In some feasible implementations, when the video encoder generates the candidate predicted motion vector list in the AMVP operation 210, the candidate predicted motion vector list may be limited to two candidate predicted motion vectors. In contrast, when the video encoder generates the candidate predicted motion vector list in a merge operation, the candidate predicted motion vector list may comprise more candidate predicted motion vectors (for example, five candidate predicted motion vectors).

After generating the candidate predicted motion vector list for the current PU, the video encoder may generate one or more motion vector differences (MVD) for each candidate predicted motion vector in the candidate predicted motion vector list (214). The video encoder may determine a difference between a motion vector indicated by a candidate predicted motion vector and a corresponding motion vector for the current PU, to generate a motion vector difference for the candidate predicted motion vector.

If the current PU is predicted unidirectionally, the video encoder may generate a single MVD for each candidate predicted motion vector. If the current PU is predicted bidirectionally, the video encoder may generate two MVDs for each candidate predicted motion vector. A first MVD may indicate a difference between a motion vector indicated by the candidate predicted motion vector and the list-0 motion vector of the current PU. A second MVD may indicate a difference between a motion vector indicated by the candidate predicted motion vector and the list-1 motion vector of the current PU.

The video encoder may select one or more candidate predicted motion vectors from the candidate predicted motion vector list (215). The video encoder may select the one or more candidate predicted motion vectors in various manners. For example, the video encoder may select a candidate predicted motion vector that matches, with a minimum error, an associated motion vector of a to-be-encoded motion vector. This can reduce a quantity of bits required for representing a motion vector difference for the candidate predicted motion vector.

After selecting the one or more candidate predicted motion vectors, the video encoder may output one or more reference picture indexes for the current PU, one or more candidate predicted motion vector indexes for the current PU, and one or more motion vector differences for the one or more selected candidate predicted motion vectors (216).

In an example in which the current picture is associated with the two reference picture lists (the list 0 and the list 1) and the current PU is predicted unidirectionally, the video encoder may output a reference picture index ("ref_idx_10") for the list 0 or a reference picture index ("ref_idx_11") for the list 1. The video encoder may further output a candidate predicted motion vector index ("mvp_10_flag") that indicates a position of a selected candidate predicted motion vector of the list-0 motion vector for the current PU in the candidate predicted motion vector list. Alternatively, the video encoder may output a candidate predicted motion vector index ("mvp_11_flag") that indicates a position of a selected candidate predicted motion vector of the list-1 motion vector for the current PU in the candidate predicted motion vector list. The video encoder may further output an MVD for the list-0 motion vector or the list-1 motion vector for the current PU.

In an example in which the current picture is associated with the two reference picture lists (the list 0 and the list 1) and the current PU is predicted bidirectionally, the video encoder may output a reference picture index ("ref_idx_10") for the list 0 and a reference picture index ("ref_idx_11") for the list 1. The video encoder may further output a candidate predicted motion vector index ("mvp_10_flag") that indicates a position of a selected candidate predicted motion vector of the list-0 motion vector for the current PU in the candidate predicted motion vector list. In addition, the video encoder may output a candidate predicted motion vector index ("mvp_11_flag") that indicates a position of a selected candidate predicted motion vector of the list-1 motion vector for the current PU in the candidate predicted motion vector list. The video encoder may further output an MVD for the list-0 motion vector for the current PU and an MVD for the list-1 motion vector for the current PU.

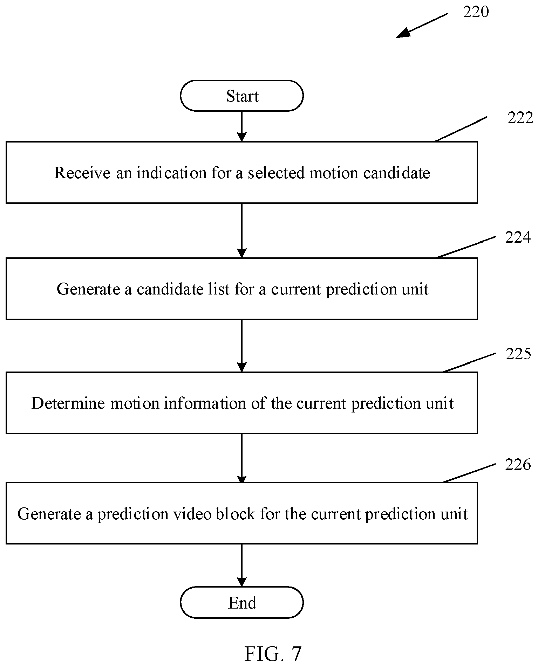

FIG. 7 is a flowchart of an implementation of motion compensation performed by a video decoder (for example, the video decoder 30) according to an embodiment of this application.

When the video decoder performs a motion compensation operation 220, the video decoder may receive an indication for a selected candidate predicted motion vector for a current PU (222). For example, the video decoder may receive a candidate predicted motion vector index indicating a position of the selected candidate predicted motion vector in a candidate predicted motion vector list for the current PU.

If motion information for the current PU is encoded in an AMVP mode and the current PU is predicted bidirectionally, the video decoder may receive a first candidate predicted motion vector index and a second candidate predicted motion vector index. The first candidate predicted motion vector index indicates a position of a selected candidate predicted motion vector for a list-0 motion vector of the current PU in the candidate predicted motion vector list. The second candidate predicted motion vector index indicates a position of a selected candidate predicted motion vector for a list-1 motion vector of the current PU in the candidate predicted motion vector list. In some feasible implementations, a single syntax element may be used to identify the two candidate predicted motion vector indexes.

In some feasible implementations, if the candidate predicted motion vector list is constructed according to the technology in this application, the video decoder may receive a candidate predicted motion vector index indicating a location of the selected candidate predicted motion vector in the candidate predicted motion vector list of the current PU; or receive an identifier indicating a location of a category to which the selected candidate predicted motion vector belongs in the candidate predicted motion vector list of the current PU, and a candidate predicted motion vector index indicating a location of the selected candidate predicted motion vector in the category to which the selected candidate predicted motion vector belongs.

In addition, the video decoder may generate the candidate predicted motion vector list for the current PU (224). The video decoder may generate the candidate predicted motion vector list for the current PU in various manners. For example, the video decoder may generate the candidate predicted motion vector list for the current PU by using technologies described below with reference to FIG. 8 to FIG. 12. When the video decoder generates a temporal candidate predicted motion vector for the candidate predicted motion vector list, the video decoder may explicitly or implicitly set a reference picture index identifying a reference picture including a co-located PU, as described above with respect to FIG. 5. According to the technology in this application, during construction of the candidate predicted motion vector list, a flag bit may be used to indicate one type of candidate predicted motion vectors in the candidate predicted motion vector list, so as to control a length of the candidate predicted motion vector list.

After generating the candidate predicted motion vector list for the current PU, the video decoder may determine the motion information for the current PU based on motion information indicated by one or more selected candidate predicted motion vectors in the candidate predicted motion vector list for the current PU (225). For example, if the motion information for the current PU is encoded in a merge mode, the motion information for the current PU may be the same as the motion information indicated by the selected candidate predicted motion vector. If the motion information for the current PU is encoded in the AMVP mode, the video decoder may reconstruct one or more motion vectors for the current PU by using one or more motion vectors indicated by the selected candidate predicted motion vector and one or more MVDs indicated in a bitstream. A reference picture index and a prediction direction identifier of the current PU may be the same as one or more reference picture indexes and prediction direction identifiers of the one or more selected candidate predicted motion vectors. After determining the motion information for the current PU, the video decoder may generate a prediction picture block for the current PU based on one or more reference blocks indicated by the motion information for the current PU (226).

FIG. 8 is a schematic diagram of an example of a coding unit (CU) and a neighboring picture block associated with the coding unit according to an embodiment of this application. FIG. 8 is a schematic diagram for illustrating a CU 250 and schematic candidate predicted motion vector positions 252A to 252E associated with the CU 250. In this application, the candidate predicted motion vector positions 252A to 252E may be collectively referred to as a candidate predicted motion vector position 252. The candidate predicted motion vector position 252 represents a spatial candidate predicted motion vector that is in a same picture as the CU 250. The candidate predicted motion vector position 252A is on the left of the CU 250. The candidate predicted motion vector position 252B is on the top of the CU 250. The candidate predicted motion vector position 252C is on the top right of the CU 250. The candidate predicted motion vector position 252D is on the bottom left of the CU 250. The candidate predicted motion vector position 252E is on the top left of the CU 250. FIG. 8 shows a schematic implementation of a manner in which an inter prediction module 121 and a motion compensation module may generate candidate predicted motion vector lists. The following explains the implementation with reference to the inter prediction module 121, but it should be understood that the motion compensation module may implement the same technology and thus generate the same candidate prediction motion vector list.

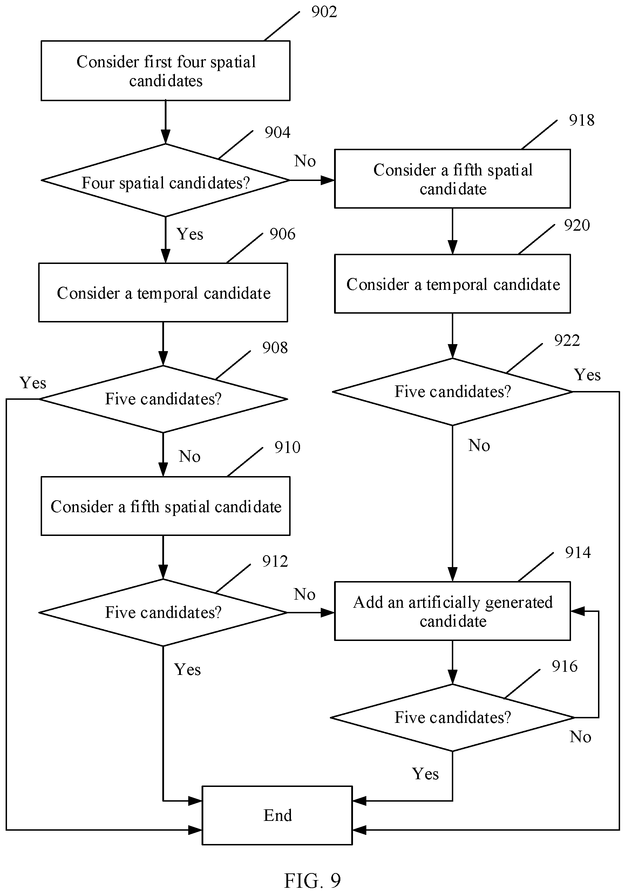

FIG. 9 is a flowchart of an implementation of constructing a candidate predicted motion vector list according to an embodiment of this application. A technology in FIG. 9 is described based on a list including five candidate predicted motion vectors, but the technologies described in this specification may alternatively be used with a list with another size. The five candidate predicted motion vectors each may have an index (for example, 0 to 4). The technology in FIG. 9 is described based on a general video decoder. The general video decoder may be, for example, a video encoder (for example, the video encoder 20) or a video decoder (for example, the video decoder 30). The candidate predicted motion vector list constructed based on the technology in this application is described in detail in the following embodiment, and details are not described herein.

To reconstruct a candidate predicted motion vector list according to an implementation of FIG. 9, the video decoder first considers four spatial candidate predicted motion vectors (902). The four spatial candidate predicted motion vectors may correspond to candidate predicted motion vector positions 252A, 252B, 252 C, and 252D. The four spatial candidate predicted motion vectors may correspond to motion information for four PUs that are located in a same picture as a current CU (for example, a CU 250). The video decoder may consider the four spatial candidate predicted motion vectors in the list in a specified order. For example, the candidate predicted motion vector position 252A may be first considered. If the candidate predicted motion vector position 252A is available, the candidate predicted motion vector position 252A may be assigned to an index 0. If the candidate predicted motion vector position 252A is unavailable, the video decoder may not add the candidate predicted motion vector position 252A to the candidate predicted motion vector list. A candidate predicted motion vector position may be unavailable for various reasons. For example, if the candidate predicted motion vector position does not fall within a current picture, the candidate predicted motion vector position may be unavailable. In another feasible implementation, if the candidate predicted motion vector position undergoes intra prediction, the candidate predicted motion vector position may be unavailable. In another feasible implementation, if the candidate predicted motion vector position is in a slice different from a slice corresponding to the current CU, the candidate predicted motion vector position may be unavailable.

After considering the candidate predicted motion vector position 252A, the video decoder may consider the candidate predicted motion vector position 252B. If the candidate predicted motion vector position 252B is available and different from the candidate predicted motion vector position 252A, the video decoder may add the candidate predicted motion vector position 252B to the candidate predicted motion vector list. In this specific context, the term "same" or "different" means that motion information associated with candidate predicted motion vector positions is the same or different. Therefore, if two candidate predicted motion vector positions have same motion information, the two candidate predicted motion vector positions are considered to be the same; or if two candidate predicted motion vector positions have different motion information, the two candidate predicted motion vector positions are considered to be different. If the candidate predicted motion vector position 252A is unavailable, the video decoder may assign the candidate predicted motion vector position 252B to the index 0. If the candidate predicted motion vector position 252A is available, the video decoder may assign the candidate predicted motion vector position 252 to an index 1. If the candidate predicted motion vector position 252B is unavailable or is the same as the candidate predicted motion vector position 252A, the video decoder skips adding the candidate predicted motion vector position 252B to the candidate predicted motion vector list.

Similarly, the video decoder considers the candidate predicted motion vector position 252C to determine whether to add the candidate predicted motion vector position 252C to the list. If the candidate predicted motion vector position 252C is available and different from the candidate predicted motion vector positions 252B and 252A, the video decoder may assign the candidate predicted motion vector position 252C to a next available index. If the candidate predicted motion vector position 252C is unavailable or is the same as at least one of the candidate predicted motion vector positions 252A and 252B, the video decoder does not add the candidate predicted motion vector position 252C to the candidate predicted motion vector list. Next, the video decoder considers the candidate predicted motion vector position 252D. If the candidate predicted motion vector position 252D is available and different from the candidate predicted motion vector positions 252A, 252B, and 252C, the video decoder may assign the candidate predicted motion vector position 252D to a next available index. If the candidate predicted motion vector position 252D is unavailable or is the same as at least one of the candidate predicted motion vector positions 252A, 252B, and 252C, the video decoder does not add the candidate predicted motion vector position 252D to the candidate predicted motion vector list. In the foregoing implementation, an example in which the candidate predicted motion vectors 252A to 252D are considered to determine whether to add the candidate predicted motion vectors 252A to 252D in the candidate predicted motion vector list is generally described. However, in some implementations, all the candidate predicted motion vectors 252A to 252D may be first added to the candidate predicted motion vector list, and then a repeated candidate predicted motion vector position is removed from the candidate predicted motion vector list.

After the video decoder considers the first four spatial candidate predicted motion vectors, the candidate predicted motion vector list may comprise four spatial candidate predicted motion vectors, or the list may comprise less than four spatial candidate predicted motion vectors. If the list comprises four spatial candidate predicted motion vectors (904, yes), the video decoder considers a temporal candidate predicted motion vector (906). The temporal candidate predicted motion vector may correspond to motion information for a co-located PU of a picture different from the current picture. If the temporal candidate predicted motion vector is available and different from the first four spatial candidate predicted motion vectors, the video decoder assigns the temporal candidate predicted motion vector to an index 4. If the temporal candidate predicted motion vector is unavailable or is the same as one of the first four spatial candidate predicted motion vectors, the video decoder does not add the temporal candidate predicted motion vector to the candidate predicted motion vector list. Therefore, after the video decoder considers the temporal candidate predicted motion vector (906), the candidate predicted motion vector list may comprise five candidate predicted motion vectors (the first four spatial candidate predicted motion vectors considered in 902 and the temporal candidate predicted motion vector considered in 904) or may comprise four candidate predicted motion vectors (the first four spatial candidate predicted motion vectors considered in 902). If the candidate predicted motion vector list comprises five candidate predicted motion vectors (908, yes), the video decoder completes constructing the list.

If the candidate predicted motion vector list comprises four candidate predicted motion vectors (908, no), the video decoder may consider a fifth spatial candidate predicted motion vector (910). The fifth spatial candidate predicted motion vector may (for example) correspond to a candidate predicted motion vector position 252E. If the candidate predicted motion vector at the position 252E is available and different from the candidate predicted motion vectors at the positions 252A, 252B, 252C, and 252D, the video decoder may add the fifth spatial candidate predicted motion vector to the candidate predicted motion vector list, and assign the fifth spatial candidate predicted motion vector to the index 4. If the candidate predicted motion vector at the position 252E is unavailable or is the same as the candidate predicted motion vectors at the candidate predicted motion vector positions 252A, 252B, 252C, and 252D, the video decoder may not add the candidate predicted motion vector at the position 252 to the candidate predicted motion vector list. Therefore, after the fifth spatial candidate predicted motion vector is considered (910), the list may comprise five candidate predicted motion vectors (the first four spatial candidate predicted motion vectors considered in 902 and the fifth spatial candidate predicted motion vector considered in 910) or may comprise four candidate predicted motion vectors (the first four spatial candidate predicted motion vectors considered in 902).

If the candidate predicted motion vector list comprises five candidate predicted motion vectors (912, yes), the video decoder completes generating the candidate predicted motion vector list. If the candidate predicted motion vector list comprises four candidate predicted motion vectors (912, no), the video decoder adds an artificially generated candidate predicted motion vector (914) until the list comprises five candidate predicted motion vectors (916, yes).

If the list comprises less than four spatial candidate predicted motion vectors (904, no) after the video decoder considers the first four spatial candidate predicted motion vectors, the video decoder may consider a fifth spatial candidate predicted motion vector (918). The fifth spatial candidate predicted motion vector may (for example) correspond to a candidate predicted motion vector position 252E. If the candidate predicted motion vector at the position 252E is available and different from the existing candidate predicted motion vectors in the candidate predicted motion vector list, the video decoder may add the fifth spatial candidate predicted motion vector to the candidate predicted motion vector list, and assign the fifth spatial candidate predicted motion vector to a next available index. If the candidate predicted motion vector at the position 252E is unavailable or is the same as one of the existing candidate predicted motion vectors in the candidate predicted motion vector list, the video decoder may not add the candidate predicted motion vector at the position 252E to the candidate predicted motion vector list. Next, the video decoder may consider a temporal candidate predicted motion vector (920). If the temporal candidate predicted motion vector is available and different from the existing candidate predicted motion vectors in the candidate predicted motion vector list, the video decoder may add the temporal candidate predicted motion vector to the candidate predicted motion vector list, and assign the temporal candidate predicted motion vector to a next available index. If the temporal candidate predicted motion vector is unavailable or is the same as one of the existing candidate predicted motion vectors in the candidate predicted motion vector list, the video decoder may not add the temporal candidate predicted motion vector to the candidate predicted motion vector list.

If the candidate predicted motion vector list comprises five candidate predicted motion vectors (922, yes) after the fifth spatial candidate predicted motion vector (in 918) and the temporal candidate predicted motion vector (in 920) are considered, the video decoder completes generating the candidate predicted motion vector list. If the candidate predicted motion vector list comprises less than five candidate predicted motion vectors (922, no), the video decoder adds an artificially generated candidate predicted motion vector (914) until the list comprises five candidate predicted motion vectors (916, yes).

In a possible implementation, an additional merge candidate predicted motion vector may be artificially generated after a spatial candidate predicted motion vector and a temporal candidate predicted motion vector, so that a size of a merge candidate predicted motion vector list is fixed and equal to a specified quantity (for example, five in the feasible implementation of FIG. 9 above) of merge candidate predicted motion vectors. The additional merge candidate predicted motion vector may comprise examples of a combined bi-predictive merge candidate predicted motion vector (a candidate predicted motion vector 1), a scaled bi-predictive merge candidate predicted motion vector (a candidate predicted motion vector 2), and a zero-vector merge/AMVP candidate predicted motion vector (a candidate predicted motion vector 3). According to the technology in this application, a candidate predicted motion vector list may directly comprise a spatial candidate predicted motion vector and a temporal candidate predicted motion vector, and a flag bit in the candidate predicted motion vector list is used to indicate a manually generated additional merge candidate predicted motion vector.

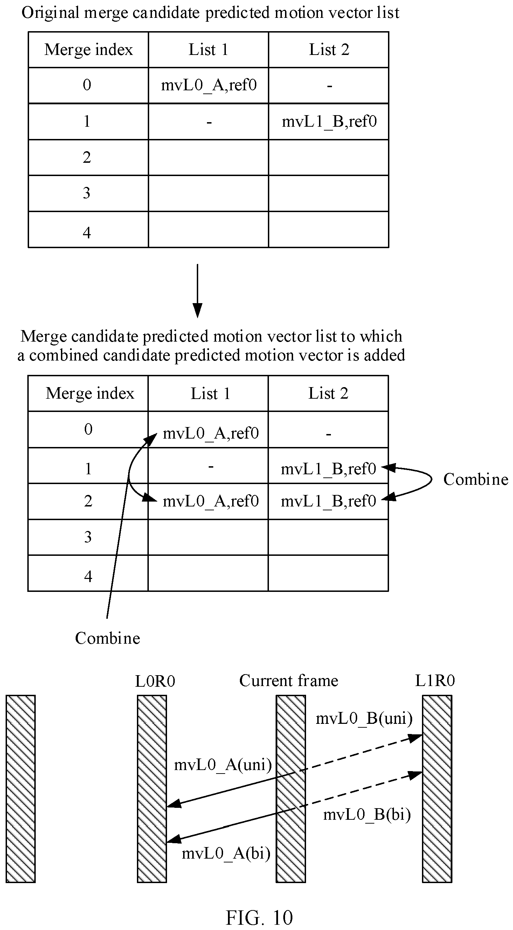

FIG. 10 is a schematic diagram of an example of adding a combined candidate motion vector to a merge-mode candidate predicted motion vector list according to an embodiment of this application. A combined bi-predictive merge candidate predicted motion vector may be generated by combining original merging candidate predicted motion vectors. Specifically, two original candidate predicted motion vectors (which have mvL0_A and ref0 or mvL1-B and ref0) may be used to generate the bi-predictive merge candidate predicted motion vector. In FIG. 10, two candidate predicted motion vectors are comprised in an original merging candidate predicted motion vector list. A prediction type of one candidate predicted motion vector is uni-prediction by using a list 0, and a prediction type of the other candidate predicted motion vector is uni-prediction by using a list 1. In this feasible implementation, mvL0_A and ref0 are taken from the list 0, and mvL1_B and ref0 are taken from the list 1. Then, a bi-predictive merge candidate predicted motion vector (which has mvL0_A and ref0 in the list 0 and mvL1_B and ref0 in the list 1) may be generated, and whether the bi-predictive merge candidate predicted motion vector is different from an existing candidate predicted motion vector in the candidate predicted motion vector list is checked. If the bi-predictive merge candidate predicted motion vector is different from the existing candidate predicted motion vector, a video decoder may add the bi-predictive merge candidate predicted motion vector to the candidate predicted motion vector list.

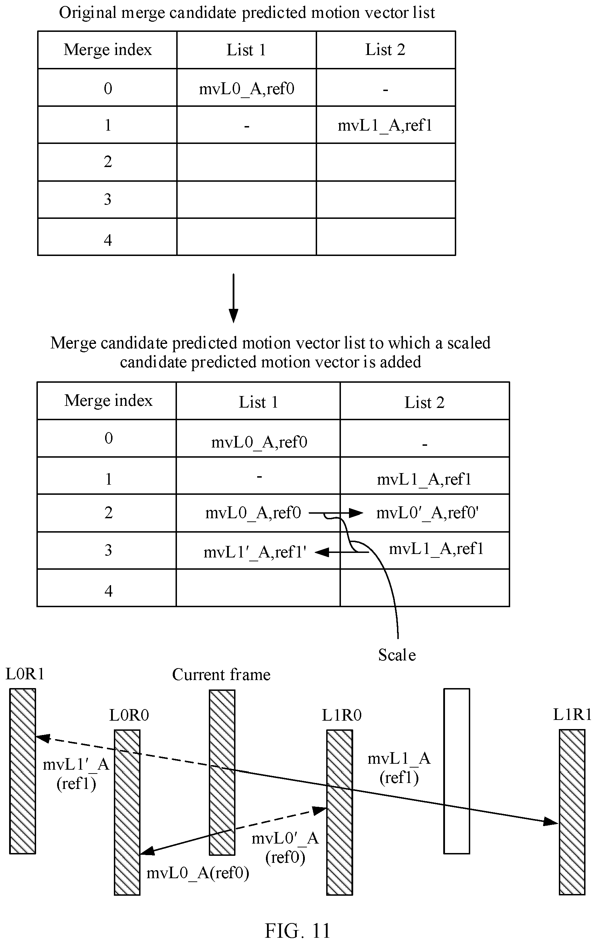

FIG. 11 is a schematic diagram of an example of adding a scaled candidate motion vector to a merge-mode candidate predicted motion vector list according to an embodiment of this application. A scaled bi-predictive merge candidate predicted motion vector may be generated by scaling an original merging candidate predicted motion vector. Specifically, one original candidate predicted motion vector (which has mvL0_A and ref0 or mvL1-A and ref1) may be used to generate the bi-predictive merge candidate predicted motion vector. In a feasible implementation in FIG. 11, two candidate predicted motion vectors are comprised in an original merging candidate predicted motion vector list. A prediction type of one candidate predicted motion vector is uni-prediction by using a list 0, and a prediction type of the other candidate predicted motion vector is uni-prediction by using a list 1. In this feasible implementation, mvL0_A and ref0 may be obtained from the list 0, and ref0 may be copied to the list 1 and is denoted as a reference index ref0'. Next, mvL0'_A may be calculated by scaling mvL0_A with ref0 and ref0'. Scaling may depend on a POC distance. Next, a bi-predictive merge candidate predicted motion vector (which has mvL0_A and ref0 in the list 0 and mvL0'_A and ref0' in the list 1) may be generated, and whether the bi-predictive merge candidate predicted motion vector is repeated is checked. If the bi-predictive merge candidate predicted motion vector is not repeated, the bi-predictive merge candidate predicted motion vector may be added to the merging candidate predicted motion vector list.

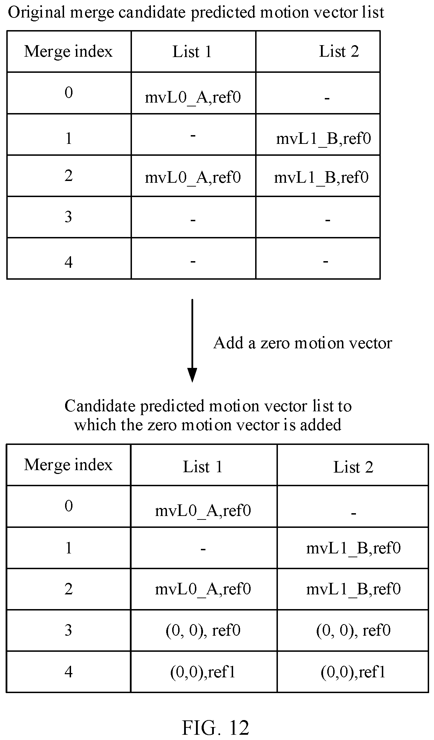

FIG. 12 is a schematic diagram of an example of adding a zero motion vector to a merge-mode candidate predicted motion vector list according to an embodiment of this application. A zero-vector merging candidate predicted motion vector may be generated by combining a zero vector and a reference index that can be referenced. If a zero-vector candidate predicted motion vector is not repeated, the zero-vector merging candidate predicted motion vector may be added to a merging candidate predicted motion vector list. Motion information of each generated merge candidate predicted motion vector may be compared with motion information of a previous candidate predicted motion vector in the list.

In a feasible implementation, if a newly generated candidate predicted motion vector is different from an existing candidate predicted motion vector in the candidate predicted motion vector list, the generated candidate predicted motion vector is added to the merging candidate predicted motion vector list. A process of determining whether the candidate predicted motion vector is different from the existing candidate predicted motion vector in the candidate predicted motion vector list is sometimes referred to as pruning (pruning). Through pruning, each newly generated candidate predicted motion vector may be compared with the existing candidate predicted motion vector in the list. In some feasible implementations, the pruning operation may comprise: comparing one or more new candidate predicted motion vectors with the existing candidate predicted motion vector in the candidate predicted motion vector list, and skipping adding a new candidate predicted motion vector that is the same as the existing candidate predicted motion vector in the candidate predicted motion vector list. In some other feasible implementations, the pruning operation may comprise: adding one or more new candidate predicted motion vectors to the candidate predicted motion vector list, and then removing a repeated candidate predicted motion vector from the list.

In various feasible implementations such as FIG. 10 to FIG. 12, based on the technology in this application, a newly generated candidate predicted motion vector may be used as one type of candidate motion vector, and a flag bit is used in an original candidate predicted motion vector list to indicate the newly generated candidate predicted motion vector. During encoding, when the selected candidate motion vector is a newly generated candidate predicted motion vector, the bitstream comprises an identifier 1 indicating a category of newly generated candidate predicted motion vectors and an identifier 2 indicating a location of the selected candidate predicted motion vector in the category of newly generated candidate predicted motion vectors. During decoding, the selected candidate motion vector is determined from the candidate predicted motion vector list based on the identifier 1 and the identifier 2, to perform a subsequent decoding procedure.

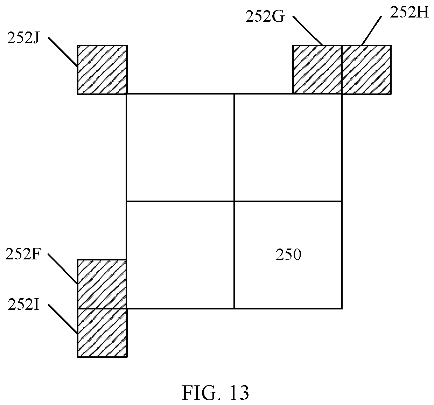

In the foregoing feasible implementations in FIG. 5 to FIG. 7 and FIG. 9 to FIG. 12, an example of a spatial candidate prediction mode is from five positions 252A to 252E shown in FIG. 8, namely, positions adjacent to the to-be-processed picture block. On the basis of the foregoing feasible implementations in FIG. 5 to FIG. 7 and FIG. 9 to FIG. 12, in some feasible implementations, for example, the spatial candidate prediction mode may further comprise a position that is within a preset distance from the to-be-processed picture block but that is not adjacent to the to-be-processed picture block. For example, this type of position may be shown in 252F to 252J in FIG. 13. It should be understood that FIG. 13 is an example schematic diagram of a coding unit and a picture block in a neighboring position associated with the coding unit according to an embodiment of this application. A position of a picture block that is located in a same picture frame as the to-be-processed picture block, that has been reconstructed when the to-be-processed picture block is processed, and that is not adjacent to the to-be-processed picture block falls within a range of this type of position.

It may be assumed that this type of position is referred to as a spatial non-adjacent picture block, and it may be assumed that a first spatial non-adjacent picture block, a second spatial non-adjacent picture block, and a third spatial non-adjacent picture block are available. For a physical meaning of "available", refer to the foregoing description. Details are not described again. In addition, it may be assumed that when the spatial candidate prediction mode is selected from a prediction mode in a position shown in FIG. 8, a candidate prediction motion mode list is checked and constructed in the following sequence. It should be understood that the checking process comprises the foregoing checking process for "availability" and the pruning process. Details are not described again. The candidate prediction mode list comprises: a motion vector of a picture block in a position 252A, a motion vector of a picture block in a position 252B, a motion vector of a picture block in a position 252C, a motion vector of a picture block in a position 252D, a motion vector obtained by using an alternative temporal motion vector prediction (ATMVP) technology, a motion vector of a picture block in a position 252E, and a motion vector obtained by using a spatial-temporal motion vector prediction (STMVP) technology. The ATMVP technology and the STMVP technology are recorded in detail in sections 2.3.1.1 and 2.3.1.2 of JVET-G1001-v1, and JVET-G1001-v1 is introduced herein in this specification. Details are not described. It should be understood that, for example, the candidate prediction mode list comprises the foregoing seven predicted motion vectors. According to different specific implementations, a quantity of predicted motion vectors comprised in the candidate prediction mode list may be smaller than 7. For example, the first five predicted motion vectors are selected to form the candidate prediction mode list, and the motion vectors constructed in the feasible implementations in FIG. 10 to FIG. 12 described above may be further added to the candidate prediction mode list, so that the candidate prediction mode list comprises more predicted motion vectors. In a feasible implementation, the first spatially non-contiguous picture block, the second spatially non-contiguous picture block, and third spatially non-contiguous picture block may be added to the candidate prediction mode list, and are used as predicted motion vectors of the to-be-processed picture block. Further, it may be assumed that, the motion vector of the picture block in the position 252A, the motion vector of the picture block in the position 252B, the motion vector of the picture block in the position 252C, the motion vector of the picture block in the position 252D, the motion vector obtained by using the ATMVP technology, the motion vector of the picture block in the position 252E, and the motion vector obtained by using the STMVP technology are MVL, MVU, MVUR, MVDL, MVA, MVUL, and MVS respectively. It is assumed that motion vectors of the first spatially non-contiguous picture block, the second spatially non-contiguous picture block, and third spatially non-contiguous picture block are MV0, MV1, and MV2 respectively, and a candidate predicted motion vector list may be checked and constructed in the following sequence:

Example 1: MVL, MVU, MVUR, MVDL, MV0, MV1, MV2, MVA, MVUL, and MVS;
example 2: MVL, MVU, MVUR, MVDL, MVA, MV0, MV1, MV2, MVUL, and MVS;
example 3: MVL, MVU, MVUR, MVDL, MVA, MVUL, MV0, MV1, MV2, and MVS;

example 4: MVL, MVU, MVUR, MVDL, MVA, MVUL, MVS, MV0, MV1, and MV2;
example 5: MVL, MVU, MVUR, MVDL, MVA, MV0, MVUL, MV1, MVS, and MV2;
example 6: MVL, MVU, MVUR, MVDL, MVA, MV0, MVUL, MV1, MV2, and MVS; and
example 7: MVL, MVU, MVUR, MVDL, MVA, MVUL, MV0, MV1, MV2, and MVS.

It should be understood that the candidate predicted motion vector lists may be used in the merge mode or the AMVP mode described above or in another prediction mode for obtaining a predicted motion vector of a to-be-processed picture block, and may be used for an encoder side or may also be used for a decoder side corresponding to the encoder side. This is not limited. In addition, a quantity of candidate predicted motion vectors in the candidate predicted motion vector list is also preset, and is consistent on the encoder side and the decoder side. A specific quantity is not limited.

It should be understood that, in example 1 to example 7, several feasible composition manners of the candidate predicted motion vector list are provided as examples. Based on a motion vector of a spatially non-contiguous picture block, there may be another composition manner of a candidate predicted motion vector list and another arrangement manner of candidate predicted motion vectors in the list. This is not limited.

An embodiment of this application provides another method for constructing a candidate predicted motion vector list. Compared with the method for constructing the candidate predicted motion vector list in examples 1 to 7, this embodiment combines a candidate predicted motion vector determined in another embodiment with a preset vector difference, to form a new candidate predicted motion vector, thereby improving prediction precision of a predicted motion vector, and improving coding efficiency.

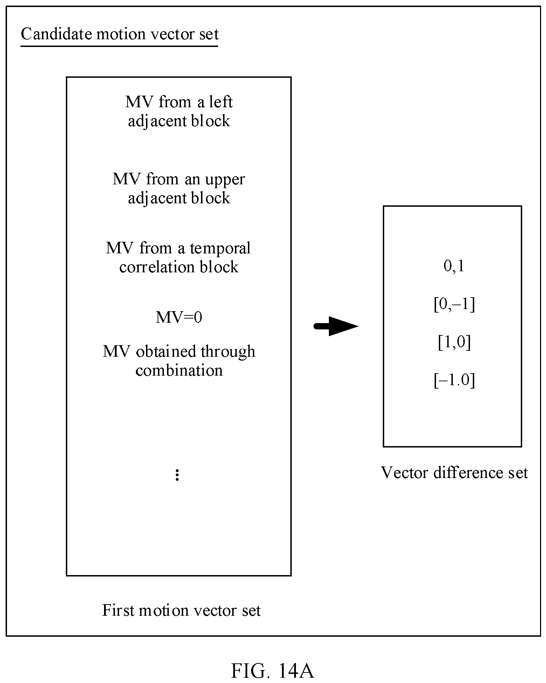

In a feasible implementation of this application, as shown in FIG. 14A, the candidate predicted motion vector list of the to-be-processed picture block comprises two sublists: a first motion vector set and a vector difference set. For composition of the first motion vector set, refer to various composition manners in the foregoing embodiments of this specification, for example, a composition manner of a candidate motion vector set in the merge mode or the AMVP mode specified in the H.265 standard. The vector difference set comprises one or more preset vector differences.

In some feasible implementations, each vector difference in the vector difference set is added to an original target motion vector determined from the first motion vector set, and a vector difference obtained after the addition and the original target motion vector form a new motion vector set.

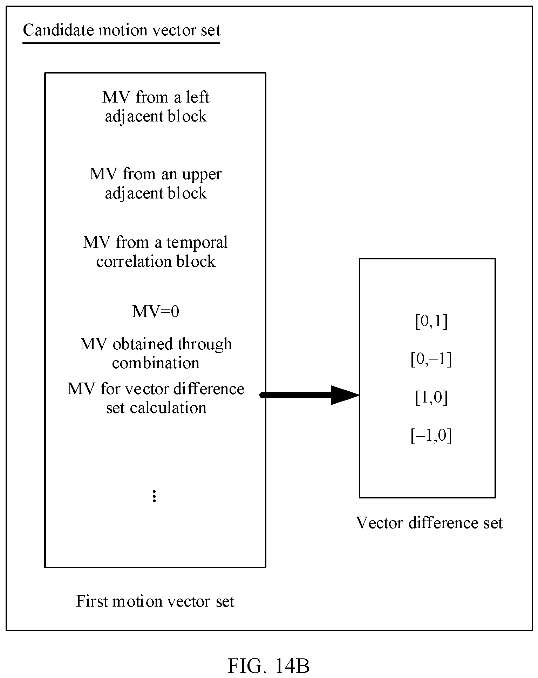

In some feasible implementations, in the candidate predicted motion vector list shown in FIG. 14A, the vector difference set may be comprised in the candidate predicted motion vector list as a subset, and a flag bit (an MV calculated based on the vector difference set) in the candidate predicted motion vector list is used to indicate the vector difference set. Each vector difference in the vector difference set is indicated by using an index, and the constructed candidate predicted motion vector list is shown in FIG. 14B.

It should be understood that a manner of indicating one type of candidate motion vectors in the predicted motion vector list by using a flag bit may be used in the merge mode or the AMVP mode described above or in another prediction mode for obtaining a predicted motion vector of a to-be-processed picture block, and may be used for an encoder side or may also be used for a decoder side corresponding to the encoder side. This is not limited. In addition, a quantity of candidate predicted motion vectors in the candidate predicted motion vector list is also preset, and is consistent on the encoder side and the decoder side. A specific quantity is not limited.

With reference to the accompanying drawings, the following describes in detail the decoding method for predicting motion information provided in the embodiments of this application. According to the technology in the embodiments of this application, when constructing a candidate motion information list, an encoder side or a decoder side indicates one type of candidate motion information in a list by using a flag bit, to control a length of the list. The decoding method for predicting motion information provided in the embodiments of this application is described based on this. The method is performed by a decoding apparatus, and the decoding apparatus may be the video decoder 200 in the video coding system 1 shown in FIG. 1, or may be a functional unit in the video decoder 200. This is not specifically limited in this application.

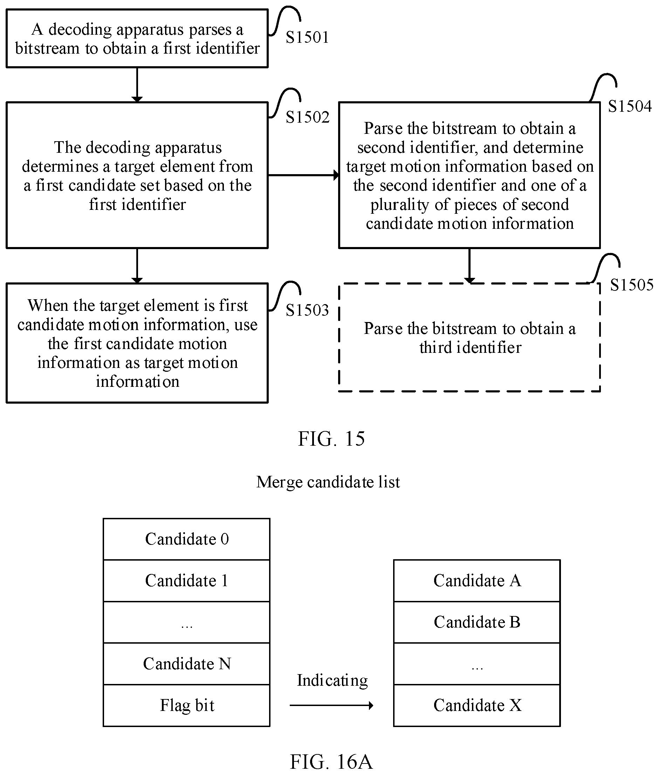

FIG. 15 is a schematic flowchart of an embodiment of this application, and relates to a decoding method for predicting motion information. The method may specifically comprise the following steps.

S1501: The decoding apparatus parses a bitstream to obtain a first identifier.

As described above, the bitstream is sent after an encoder side encodes a current picture block, the first identifier indicates a location of selected candidate motion information when the encoder side encodes the current picture block, and the first identifier is used by the decoding apparatus to determine the selected candidate motion information, so as to predict motion information of the to-be-processed picture block.

In a possible implementation, the first identifier may be a specific index of the selected candidate motion information. In this case, one candidate motion information may be uniquely determined by using the first identifier.

In a possible implementation, the first identifier may be an identifier of a category to which the selected candidate motion information belongs. In this case, the bitstream further comprises a fourth identifier, to indicate a specific location of the selected candidate motion information in the category to which the selected candidate motion information belongs.

It should be noted that a specific implementation of parsing the bitstream to obtain the identifier is not specifically limited in this application, and locations and forms of the first identifier and the fourth identifier in the bitstream are not specifically limited in this embodiment of this application either.

Optionally, a fixed-length coding mode may be used for the first identifier. For example, the first identifier may be a 1-bit identifier, and types indicated by the first identifier are limited.

Optionally, a variable-length coding mode may be used for the first identifier.

S1502: The decoding apparatus determines a target element from a first candidate set based on the first identifier

Specifically, content of the first candidate set may comprise the following two possible implementations.

Possible implementation 1: Elements in the first candidate set comprise at least one first candidate motion information and at least one second candidate set, and elements in the second candidate set comprise a plurality of second candidate motion information.

Possible implementation 2: Elements in the first candidate set may comprise at least one first candidate motion information and a plurality of second candidate motion information, the first candidate motion information comprises first motion information, and the second candidate motion information comprises a preset motion information offset. New motion information may be generated based on the first motion information and the preset motion information offset.

The first candidate set may be a constructed candidate motion information list. The first candidate set directly comprises the at least one first candidate motion information, and the plurality of second candidate motion information are comprised in the first candidate set in a form of the second candidate set.

In a feasible implementation, the second candidate motion information is different from the first candidate motion information.

For example, the first candidate motion information and the second candidate motion information comprised in each second candidate set may be determined by using different MV prediction modes, or may be candidate motion information of different types. This is not specifically limited in this embodiment of this application.

For example, the first candidate motion information may be obtained in a merge mode, and the second candidate motion information may be obtained in an affine merge mode.

For example, the first candidate motion information may be original candidate motion information, and the second candidate motion information may be motion information generated based on the original candidate motion information.

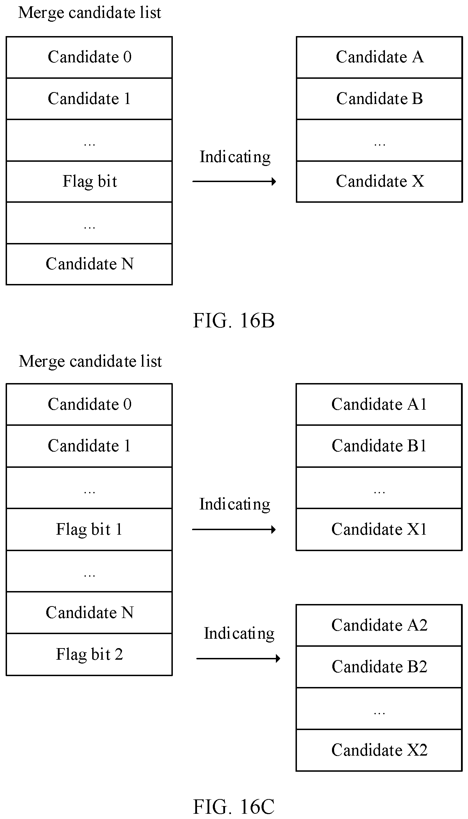

For example, as shown in FIG. 16A and FIG. 16B, two merge candidate lists are shown. In the merge candidate list shown in FIG. 16A or FIG. 16B, a flag bit in the list is used to indicate a candidate motion information set. The flag bit may be located at any location in the list. This is not specifically limited in this embodiment of this application. For example, the flag bit may be located at the end of the list shown in FIG. 16A. Alternatively, the flag bit may be located in the middle of the list shown in FIG. 16B. When the first identifier in the bitstream indicates the flag bit, it is determined that the target element is the candidate motion information set indicated by the flag bit. The candidate motion information set indicated by the flag bit comprises a plurality of second candidate motion information. Then, one candidate motion information in the candidate motion information set indicated by the flag bit is selected as target motion information based on a further identifier (the second identifier in S1504), to predict the motion information of the to-be-processed picture block.

For example, as shown in FIG. 16A and FIG. 16B, two merge candidate lists are shown. In the merge candidate list shown in FIG. 16A or FIG. 16B, a flag bit in the list is used to indicate a candidate motion information set. The flag bit may be located at any location in the list. This is not specifically limited in this embodiment of this application. For example, the flag bit may be located at the end of the list shown in FIG. 16A. Alternatively, the flag bit may be located in the middle of the list shown in FIG. 16B. When the first identifier in the bitstream indicates the flag bit, it is determined that the target element is a plurality of second candidate motion information indicated by the flag bit. The second candidate motion information comprises a preset motion information offset. Then, one candidate motion information is selected from the plurality of second candidate motion information indicated by the flag bit based on a further identifier (the second identifier in S1504), and target motion information is determined based on the selected second candidate motion information, to predict the motion information of the to-be-processed picture block.

In another feasible implementation, as shown in FIG. 16C, more than one flag bit is added to the merge candidate list, and each flag bit points to one specific candidate motion information set or a plurality of motion information that comprise a preset motion information offset. When the first identifier in the bitstream indicates a flag bit, it is determined that the target element is candidate motion information in a candidate motion information set indicated by the flag bit, or one of a plurality of candidate motion information (including a preset motion information offset) indicated by the flag bit, and then the target motion information is determined.

In FIG. 16A, FIG. 16B, and FIG. 16C, a flag bit (pointer) is introduced into a merge list to implement candidate introduction in a subset manner. When a plurality of candidates are introduced, a length of the candidate list is greatly reduced, list reconstruction complexity is reduced, and hardware implementation is simplified.

In a feasible implementation, the first candidate motion information may comprise motion information of a spatially neighboring picture block of the to-be-processed picture block. It should be noted that a definition of the motion information of the spatially neighboring picture block has been described in the foregoing content, and details are not described herein again.

In a feasible implementation, the second candidate motion information may comprise motion information of a spatially non-neighboring picture block of the to-be-processed picture block. It should be noted that a definition of the motion information of the spatially non-neighboring picture block has been described in the foregoing content, and details are not described herein again.

A manner of obtaining the first motion information may be selected based on an actual requirement. This is not specifically limited in this embodiment of this application. The preset motion information offset used to obtain the second motion information may be a fixed value or may be a value selected from a set. Content and a form of the preset motion information offset are not specifically limited in this embodiment of this application.

In a feasible implementation, the first candidate motion information comprises the first motion information, the at least one second candidate set is a plurality of second candidate sets, the plurality of second candidate sets comprise at least one third candidate set and at least one fourth candidate set, elements in the third candidate set comprise motion information of spatially non-neighboring picture blocks of a plurality of to-be-processed picture blocks, and elements in the fourth candidate set comprise a plurality of motion information obtained based on the first motion information and the preset motion information offset.

In a feasible implementation, the at least one second candidate set is a plurality of second candidate sets, the plurality of second candidate sets comprise at least one fifth candidate set and at least one sixth candidate set, elements in the fifth candidate set comprise motion information of spatially non-neighboring picture blocks of a plurality of to-be-processed picture blocks, and elements in the sixth candidate set comprise a plurality of preset motion information offsets.

In a feasible implementation, an encoded codeword used to identify the first motion information is the shortest in the at least one first candidate motion information.

In a feasible implementation, the first motion information does not comprise motion information obtained in an ATMVP mode.

As described in S1501, the first identifier may be an index in the first candidate set, or may be an identifier of the category of the motion information. Based on specific content, S1502 may be implemented as the following two cases.

Case 1: The first identifier is an index in the first candidate set.

In a possible implementation, in Case 1, the decoding apparatus may determine an element at a location indicated by the first identifier in the first candidate set as the target element in S1502. Because the first candidate set comprises the at least one first candidate motion information and the at least one second candidate set, the target element determined based on the first identifier may be the first candidate motion information, or may be a second candidate set, depending on content arranged at the location indicated by the first identifier.

In another possible implementation, in Case 1, the decoding apparatus may determine an element at a location indicated by the first identifier in the first candidate set as the target element in S1502. Because the first candidate set comprises the at least one first candidate motion information and the plurality of second candidate motion information, the target element determined based on the first identifier may be the first candidate motion information, or may be obtained based on the plurality of second candidate motion information, depending on content arranged at the location indicated by the first identifier.

Case 2: The first identifier is an identifier of a candidate motion information category.

In Case 2, the decoding apparatus determines, based on the first identifier, a category to which the target element belongs in S1502. The decoding apparatus further parses the bitstream to obtain a fourth identifier, where the fourth identifier indicates a specific location of the target element in the category, and uniquely determines the target element in the category based on the fourth identifier. Specifically, if the first identifier indicates that the target element belongs to a category of first candidate motion information, one first candidate motion information is determined as the target element from the at least one first candidate motion information based on the fourth identifier. If the first identifier indicates that the target element belongs to a category of second candidate motion information, one second candidate set or one second candidate motion information is determined as the target element based on the fourth identifier.

For example, it is assumed that the first candidate motion information is merge motion information, the first candidate set comprises two second candidate sets, second candidate motion information in one second candidate set is first-type affine merge motion information, and second candidate motion information in the other second candidate set is second-type affine merge motion information. Configuration is as follows: When the identifier is 0, the identifier indicates the merge motion information, and when the identifier is 1, the identifier indicates affine merge motion information. If the first identifier obtained by the decoding apparatus by parsing the bitstream in S1501 is 0, the decoding apparatus further parses the bitstream in S1502 to obtain the fourth identifier. The decoding apparatus determines one merge motion information from the at least one merge motion information in the first candidate set as the target element based on the fourth identifier. If the first identifier obtained by the decoding apparatus by parsing the bitstream in S1501 is 1, the decoding apparatus further parses the bitstream in S1502 to obtain the fourth identifier. The decoding apparatus determines one of the two second candidate sets as the target element based on the fourth identifier.

For example, it is assumed that the first candidate motion information is merge motion information, the first candidate set comprises two second candidate sets, second candidate motion information in one second candidate set is a preset motion information offset corresponding to first-type affine merge motion information, and second candidate motion information in the other second candidate set is a preset motion information offset corresponding to second-type affine merge motion information. Configuration is as follows: When the identifier is 0, the identifier indicates the merge motion information, and when the identifier is 1, the identifier indicates affine merge motion information. If the first identifier obtained by the decoding apparatus by parsing the bitstream in S1501 is 0, the decoding apparatus further parses the bitstream in S1502 to obtain the fourth identifier. The decoding apparatus determines one merge motion information from the at least one merge motion information in the first candidate set as the target element based on the fourth identifier. If the first identifier obtained by the decoding apparatus by parsing the bitstream in S1501 is 1, the decoding apparatus further parses the bitstream in S1502 to obtain the fourth identifier. The decoding apparatus determines one second candidate set from the two second candidate sets based on the fourth identifier, and determines the target element based on one of second candidate motion information in the determined second candidate set.

Optionally, in S1502, if the decoding apparatus determines that the target element is the first candidate motion information, S1503 is performed. In S1502, if the decoding apparatus determines that the target element is the second candidate set or is obtained based on the plurality of second candidate motion information, S1504 is performed.

S1503: When the target element is the first candidate motion information, use the first candidate motion information as the target motion information.

The target motion information is used to predict motion information of the to-be-processed picture block.

Optionally, that the target motion information is used to predict motion information of the to-be-processed picture block comprises: using the target motion information as the motion information of the to-be-processed picture block; or using the target motion information as predicted motion information of the to-be-processed picture block. In actual application, the target motion information may be selected based on an actual requirement to predict the motion information of the to-be-processed picture block. Specific implementation is not specifically limited herein.

Further, subsequent processing of the to-be-processed picture block is described in detail in the foregoing content, and details are not described herein again.

S1504: Parse the bitstream to obtain the second identifier, and determine the target motion information based on the second identifier and one of the plurality of second candidate motion information.

S1504 of parsing the bitstream to obtain the second identifier, and determining the target motion information based on the second identifier and one of the plurality of second candidate motion information may be specifically implemented as follows: parsing the bitstream to obtain the second identifier, and determining the target motion information from the plurality of second candidate motion information based on the second identifier.

It should be noted that a specific implementation of parsing the bitstream to obtain the identifier is not specifically limited in this application, and a location and a form of the second identifier in the bitstream are not specifically limited in this embodiment of this application either.

Optionally, a fixed-length coding mode may be used for the second identifier. For example, the second identifier may be a 1-bit identifier, and types indicated by the first identifier are limited.

Optionally, a variable-length coding mode may be used for the second identifier. For example, the second identifier may be a multi-bit identifier.

Optionally, based on different content of the second candidate motion information, the determining the target motion information based on the second identifier and one of the plurality of second candidate motion information in S1504 may be implemented in the following feasible implementation, but is not limited thereto.

In a feasible implementation, the first candidate motion information comprises the first motion information, the second candidate motion information comprises the second motion information, and the second motion information is obtained based on the first motion information and the preset motion information offset. In this manner, the second identifier may indicate a specific location of the target motion information in the second candidate set. That the decoding apparatus determines the target motion information from the plurality of second candidate motion information based on the second identifier in S1504 may be specifically implemented as follows: determining, as the target motion information, second candidate motion information at the location indicated by the second identifier in the second candidate set that is used as the target element.

In a feasible implementation, the first candidate motion information comprises the first motion information, and the second candidate motion information comprises the preset motion information offset. In this manner, the second identifier indicates a specific location of a target offset in the second candidate set. That the decoding apparatus determines the target motion information from the plurality of second candidate motion information based on the second identifier in S1504 may be specifically implemented as follows: determining the target offset from a plurality of preset motion information offsets based on the second identifier; and determining the target motion information based on the first motion information and the target offset.

In a feasible implementation, the first candidate motion information comprises the first motion information, and the second candidate motion information comprises the preset motion information offset. Before the determining the target offset from a plurality of preset motion information offsets based on the second identifier, the decoding method for predicting motion information provided in this application may further comprise: multiplying the plurality of preset motion information offsets by a preset coefficient, to obtain a plurality of adjusted motion information offsets. Correspondingly, the determining the target offset from a plurality of preset motion information offsets based on the second identifier comprises: determining the target offset from the plurality of adjusted motion information offsets based on the second identifier.

In a feasible implementation, the first candidate motion information comprises the first motion information, and the second candidate motion information comprises the preset motion information offset. In this manner, that the decoding apparatus determines the target motion information based on the second identifier and one of the plurality of second candidate motion information in S1504 may be specifically implemented as follows: determining one motion information offset from a plurality of preset motion information offsets based on the second identifier; using, as the target offset, a value obtained by multiplying the one motion information offset by a preset coefficient; and determining the target motion information based on the first motion information and the target offset.

It should be noted that the preset coefficient may be a fixed coefficient configured in the decoding apparatus, or may be a coefficient carried in the bitstream. This is not specifically limited in this embodiment of this application.

Further optionally, when the preset coefficient is carried in the bitstream, the decoding method for predicting motion information provided in this application may further comprise S1505.

S1505: Parse the bitstream to obtain a third identifier.

The third identifier comprises the preset coefficient.

According to the decoding method for predicting motion information provided in this application, the elements in the first candidate set comprise the first candidate motion information and the at least one second candidate set, or the elements in the first candidate set comprise the first candidate motion information and the plurality of second candidate motion information. In this way, in a structure of a multi-layer candidate set, when more candidates are introduced, a set of one type of candidate motion information may be used as one element and added to the first candidate set. Compared with directly adding candidate motion information to the first candidate set, the solution in this application greatly shortens a length of the first candidate set. When the first candidate set is a candidate motion information list of inter prediction, even if more candidates are introduced, a length of the candidate motion information list can be well controlled, thereby facilitating a detection process and hardware implementation.

As examples, the following are several specific implementations of this embodiment of this application.

**Embodiment 1**

It is assumed that a maximum length of the merge candidate list is 7, and first indexes 0 to 6 indicate candidate spaces in the merge list. Candidate motion information corresponding to the first indexes 0 to 5 comprises motion vectors and reference pictures, and the first index 6 corresponds to new motion information that is generated based on candidate motion information corresponding to the index 0 and preset motion vector offsets. It is assumed that the candidate motion information corresponding to the first index 0 is forward prediction, a motion vector is (2, -3), and a reference frame POC is 2. The preset motion vector offsets are (1, 0), (0, -1), (-1, 0), and (0, 1). When a first index value obtained by parsing the bitstream is 6, it indicates that motion information used by a current picture block is the new motion information generated based on the candidate motion information corresponding to the index 0 and the preset motion vector offsets, and further decoding is performed to obtain a second index value. When the second index value obtained through further decoding is 1, the motion information of the current picture block is forward prediction, the motion vector is (2, -3) + (0, -1) = (2, -4), and the reference frame POC is 2.

**Embodiment 2**

It is assumed that a maximum length of the merge candidate list is 7, and first indexes 0 to 6 indicate candidate spaces in the merge list. Candidate motion information corresponding to the first indexes 0 to 5 comprises motion vectors and reference pictures, and the first index 6 corresponds to new motion information that is generated based on candidate motion information corresponding to the first index 0 and preset motion vector offsets. It is assumed that the candidate motion information corresponding to the first index 0 is bidirectional prediction, a forward motion vector is (2, -3), a reference frame POC is 2, a backward motion vector is (-2, -1), and a reference frame POC is 4. The preset motion vector offsets are (1, 0), (0, -1), (-1, 0), and (0, 1). When a first index value obtained by parsing the bitstream is 6, it indicates that motion information used by the current picture block is the new motion information generated based on the candidate motion information corresponding to the index 0 and the preset motion vector offsets, and further decoding is performed to obtain a second index value. When the second index value obtained through further decoding is 0, the motion information of the current picture block is bidirectional prediction, and when a current frame POC is 3, the forward reference frame POC and the backward reference frame POC are in different directions compared with the current frame POC. In this case, the forward motion vector is (2, -3) + (1, 0) = (3, -3), the reference frame POC is 2, the backward motion vector is (-2, -1) - (1, 0) = (-3, -1), and the reference frame POC is 4. When the current frame POC is 6, the forward reference frame POC and the backward reference frame POC are in the same direction as the current frame POC. In this case, the forward motion vector is (2, -3) + (1, 0) = (3, -3), the reference frame POC is 2, the backward motion vector is (-2, -1) + (1, 0) = (-1, -1), and the reference frame POC is 4.

**Embodiment 3**

It is assumed that a maximum length of the merge candidate list is 7, and first indexes 0 to 6 indicate candidate spaces in the merge list. The candidate motion information corresponding to the first indexes 0 to 5 comprises motion vectors and reference pictures. It is assumed that the candidate motion information indicated by the first index 0 is constituted by sub-block motion information, candidate motion information corresponding to the first index 1 is not constituted by sub-block motion information, motion information is forward prediction, a motion vector is (2, -3), and a reference frame POC is 2. The first index 6 corresponds to new motion information generated based on the candidate motion information corresponding to the first index 1 and preset motion vector offsets. The preset motion vector offsets are (1, 0), (0, -1), (-1, 0), and (0, 1). When a first index value obtained by parsing the bitstream is 6, it indicates that motion information used by the current picture block is the new motion information generated based on the candidate motion information corresponding to the index 1 and the preset motion vector offsets, and further decoding is performed to obtain a second index value. When the second index value obtained through further decoding is 1, the motion information of the current block is forward prediction, the motion vector is (2, -3) + (0, -1) = (2, -4), and the reference frame POC is 2.

**Embodiment 4**

It is assumed that a maximum length of the merge candidate list is 7, and first indexes 0 to 6 indicate candidate spaces in the merge list. The first index 6 indicates that spatially non-neighboring candidate motion information of the current block is used as reference motion information of the current block. It is assumed that a size of a spatially non-neighboring candidate set is 4. For the spatially non-neighboring candidate set, available spatially non-neighboring candidates are placed in the set according to a preset detection sequence. It is assumed that spatially non-neighboring candidate motion information in the set is as follows:

Second index 0: candidate 0: forward prediction, where a motion vector is (2, -3), and a reference frame POC is 2.
Second index 1: candidate 1: forward prediction, where a motion vector is (1, -3), and a reference frame POC is 4.
Second index 2: candidate 2: backward prediction, where a motion vector is (2, -4), and a reference frame POC is 2.
Second index 2: candidate 3: bidirectional prediction, where a forward motion vector is (2, -3), a reference frame POC is 2, a backward motion vector is (2, -2), and a reference frame POC is 4.

When the first index value obtained through decoding is 6, it indicates that spatially non-neighboring candidate motion information of the current block is used as reference motion information of the current block, and further decoding is performed to obtain a second index value. When the second index value obtained through further decoding is 1, motion information of the candidate 1 in the spatially non-neighboring candidate set is used as motion information of the current block.

**Embodiment 5**

It is assumed that a maximum length of the merge candidate list is 7, and first indexes 0 to 6 indicate candidate spaces in the merge list. Candidate motion information corresponding to the first index 0 is forward prediction, a motion vector is (2, -3), and a reference frame POC is 2. The first index 6 indicates that new motion information generated based on the candidate motion information corresponding to the first index 0 or spatially non-neighboring candidate motion information is used as reference motion information of the current block. It is assumed that a size of a spatially non-neighboring candidate set is 4. For the spatially non-neighboring candidate set, available spatially non-neighboring candidates are placed in the set according to a preset detection sequence. It is assumed that spatially non-neighboring candidate motion information in the set is as follows:

Second index 0: candidate 0: forward prediction, where a motion vector is (-5, -3), and a reference frame POC is 2.
Second index 1: candidate 1: forward prediction, where a motion vector is (1, -3), and a reference frame POC is 4.
Second index 2: candidate 2: backward prediction, where a motion vector is (2, -4), and a reference frame POC is 2.
Second index 2: candidate 3: bidirectional prediction, where a forward motion vector is (2, -3), a reference frame POC is 2, a backward motion vector is (2, -2), and a reference frame POC is 4.

Another four candidates are obtained based on the candidate motion information corresponding to the first index 0 and preset motion vector offsets (1, 0), (0, -1), (-1, 0), and (0, 1), and are as follows:

Second index 4: candidate 4: forward prediction, where a motion vector is (2, -3) + (1, 0), and a reference frame POC is 2.
Second index 5: candidate 5: forward prediction, where a motion vector is (2, -3) + (0, -1), and a reference frame POC is 2.
Second index 6: candidate 6: forward prediction, where a motion vector is (2, -3) + (-1, 0), and a reference frame POC is 2.
Second index 7: candidate 7: forward prediction, where a motion vector is (2, -3) + (0, 1), and a reference frame POC is 2.

When a first index value obtained through decoding is 6, it indicates that the new motion information generated based on the candidate motion information corresponding to the first index 0 or spatially non-neighboring candidate motion information is used as the reference motion information of the current block, and further decoding is performed to obtain a second index value. When the second index value obtained through further decoding is 0, motion information of the candidate 0 (forward prediction, where the motion vector is (-5, -3), and the reference frame POC is 2) in the spatially non-neighboring candidate set is used as the motion information of the current block. When the second index value obtained through further decoding is 5, motion information of the candidate 5 (forward prediction, where the motion vector is (2, -3) + (0, -1), and the reference frame POC is 2) that undergoes motion vector offset is used as the motion information of the current block.

**Embodiment 6**

It is assumed that a maximum length of the merge candidate list is 7, and first indexes 0 to 6 indicate candidate spaces in the merge list. Candidate motion information corresponding to the first index 0 is forward prediction, a motion vector is (2, -3), and a reference frame POC is 2. The first index 6 indicates that motion information used by the current block is new motion information generated based on the candidate motion information corresponding to the first index 0. Preset motion vector offsets are as follows:

(1, 0), (0, -1), (-1, 0), (0, 1); and
(2, 0), (0, -2), (-2, 0), (0, 2).

A second index value 0 represents a candidate with a spacing of 1, a second index value 1 represents a candidate with a spacing of 2, and a third index value represents a candidate index of a motion vector offset. When a first index value obtained by parsing the bitstream is 6, it indicates that motion information used by the current block is the new motion information generated based on the candidate motion information corresponding to the first index 0, and further decoding is performed to obtain the second index value. When the second index value and the third index value that are further obtained through decoding are 1 and 3 respectively, an offset motion vector (-2, 0) with a spacing of 2 and an index of 2 is selected. In this case, the motion information of the current block is forward prediction, the motion vector is (2, -3) + (-2, 0) = (0, -3), and the reference frame POC is 2.

**Embodiment 7**

It is assumed that a maximum length of the merge candidate list is 7, and first indexes 0 to 6 indicate candidate spaces in the merge list. The first index 6 indicates that one candidate in a motion information candidate set obtained by using AFFINE is used as reference motion information of the current block. It is assumed that the AFFINE motion information candidate set comprises four AFFINE motion information candidates:

    Second index 0: AFFINE candidate 0;
    Second index 1: AFFINE candidate 1;
    Second index 2: AFFINE candidate 2; and
    Second index 3: AFFINE candidate 3.

When a first index value obtained through decoding is 6, it indicates that one candidate in the motion information candidate set obtained by using AFFINE is used as the reference motion information of the current block, and further decoding is performed to obtain a second index value. When the second index value obtained through further decoding is 1, motion information of the AFFINE candidate 1 is used as motion information of the current block.

**Embodiment 8**

It is assumed that a maximum length of the merge candidate list is 7, and first indexes 0 to 6 indicate candidate spaces in the merge list. The first index 6 indicates that one candidate in a spatially neighboring motion information candidate set is used as reference motion information of the current block. It is assumed that the spatially neighboring motion information candidate set comprises four spatially neighboring motion information candidates:

    Second index 0: spatially neighboring candidate 0;
    Second index 1: spatially neighboring candidate 1;
    Second index 2: spatially neighboring candidate 2; and
    Second index 3: spatially neighboring candidate 3.

When a first index value obtained through decoding is 6, it indicates that one candidate in the spatially neighboring motion information candidate set is used as the reference motion information of the current block, and further decoding is performed to obtain a second index value. When the second index value obtained through further decoding is 1, motion information of the spatially neighboring candidate 1 is used as motion information of the current block.

**Embodiment 9**

It is assumed that a maximum length of the merge candidate list is 7, and first indexes 0 to 6 indicate candidate spaces in the merge list. The first index 6 indicates that one candidate in a temporally neighboring motion information candidate set is used as reference motion information of the current block. It is assumed that the temporally neighboring motion information candidate set comprises four temporally neighboring motion information candidates:

    Second index 0: temporally neighboring candidate 0;
    Second index 1: temporally neighboring candidate 1;
    Second index 2: temporally neighboring candidate 2; and
    Second index 3: temporally neighboring candidate 3.

When a first index value obtained through decoding is 6, it indicates that one candidate in the temporally neighboring motion information candidate set is used as the reference motion information of the current block, and further decoding is performed to obtain a second index value. When the second index value obtained through further decoding is 1, motion information of the temporally neighboring candidate 1 is used as motion information of the current block.

**Embodiment 10**

It is assumed that a maximum length of the merge candidate list is 7, and first indexes 0 to 6 indicate candidate spaces in the merge list. The first index 6 indicates that one candidate in a motion information candidate set constituted by sub-block motion information is used as reference motion information of the current block. It is assumed that the motion information candidate set constituted by sub-block motion information comprises an AFFINE motion information candidate, an ATMVP candidate, and an STMVP candidate:

    Second index 0: AFFINE candidate;

Second index 1: ATMVP candidate; and
Second index 2: STMVP candidate.

When a first index value obtained through decoding is 6, it indicates that one candidate in the motion information candidate set constituted by sub-block motion information is used as the reference motion information of the current block, and further decoding is performed to obtain a second index value. When the second index value obtained through further decoding is 1, motion information of the ATMVP candidate is used as motion information of the current block.

**Embodiment 11**

In a merge candidate space, space 0 to space 5 in the list are motion information obtained through merge, and space 6 is a motion information candidate set obtained through AFFINE. It is assumed that the first index 0 indicates that motion information obtained through merge is reference motion information of the current block, and the first index 1 indicates that one candidate in a motion information candidate set obtained through AFFINE is reference motion information of the current block. It is assumed that the AFFINE motion information candidate set comprises four AFFINE motion information candidates:

Second index 0: AFFINE candidate 0;
Second index 1: AFFINE candidate 1;
Second index 2: AFFINE candidate 2; and
Second index 3: AFFINE candidate 3.

In a case, when a first index value obtained through decoding is 1, it indicates that one candidate in the motion information candidate set obtained by using AFFINE is used as the reference motion information of the current block, and further decoding is performed to obtain a second identifier value. When the second identifier value obtained through further decoding is 1, motion information of the AFFINE candidate 1 is used as motion information of the current block.

In another case, when a first index value obtained through decoding is 0, it indicates that motion information obtained through merge is used as the reference motion information of the current block, and further decoding is performed to obtain a fourth index. When the fourth index value obtained through further decoding is 2, motion information of the space 2 in the merge candidate list is used as motion information of the current block.

**Embodiment 12**

In a merge candidate space, space 0 to space 3 in the list are motion information obtained through merge, space 4 is a temporally neighboring motion information candidate set, space 5 is a motion information candidate set constituted by sub-block motion information, and space 6 is a motion information candidate set obtained through AFFINE. It is assumed that a first index 0 indicates that the motion information obtained through merge is used as reference motion information of the current block; a first index 1 indicates that one candidate in a motion information candidate set obtained through AFFINE is used as reference motion information of the current block; a first index 01 indicates that one candidate in the temporally neighboring motion information candidate set is used as reference motion information of the current block; and a first index 11 indicates that one candidate in the motion information candidate set constituted by the sub-block motion information is used as reference motion information of the current block.

It is assumed that the AFFINE motion information candidate set comprises four AFFINE motion information candidates:

Second identifier 0: AFFINE candidate 0;
Second identifier 1: AFFINE candidate 1;
Second identifier 2: AFFINE candidate 2; and
Second identifier 3: AFFINE candidate 3.

It is assumed that the temporally neighboring motion information candidate set comprises four temporally neighboring motion information candidates:

Second index 0: temporally neighboring candidate 0;
Second index 1: temporally neighboring candidate 1;
Second index 2: temporally neighboring candidate 2; and
Second index 3: temporally neighboring candidate 3.

It is assumed that the motion information candidate set constituted by sub-block motion information comprises an AFFINE motion information candidate, an ATMVP candidate, and an STMVP candidate:

Second index 0: AFFINE candidate;
Second index 1: ATMVP candidate; and
Second index 2: STMVP candidate.

In a case, when a first index value obtained through decoding is 0, it indicates that motion information obtained through merge is used as the reference motion information of the current block, and further decoding is performed to obtain a fourth index. When the fourth index value obtained through further decoding is 2, motion information of the space 2 in the merge candidate list is used as motion information of the current block.

In a case, when a first index value obtained through decoding is 1, it indicates that one candidate in the motion information candidate set obtained by using AFFINE is used as the reference motion information of the current block, and further decoding is performed to obtain a second identifier value. When the second identifier value obtained through further decoding is 1, motion information of the AFFINE candidate 1 is used as motion information of the current block.

In a case, when a first index value obtained through decoding is 01, it indicates that one candidate in the temporally neighboring motion information candidate set is used as the reference motion information of the current block, and further decoding is performed to obtain a second identifier value. When the second identifier value obtained through further decoding is 2, motion information of the temporally neighboring candidate 2 is used as motion information of the current block.

In a case, when a first index value obtained through decoding is 11, it indicates that one candidate in the motion information candidate set constituted by sub-block motion information is used as the reference motion information of the current block, and further decoding is performed to obtain a second index value. When the second index value obtained through further decoding is 1, motion information of the ATMVP candidate is used as motion information of the current block.

An embodiment of this application provides a decoding apparatus for predicting motion information. The apparatus may be a video decoder, a video encoder, or a decoder. Specifically, the decoding apparatus for predicting motion information is configured to perform the steps performed by the decoding apparatus in the foregoing decoding method for predicting motion information. The decoding apparatus for predicting motion information provided in this embodiment of this application may comprise modules corresponding to corresponding steps.

In the embodiments of this application, the decoding apparatus for predicting motion information may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. In this embodiment of this application, division into the modules is an example, and is merely logical function division. There may be another division manner in actual implementation.

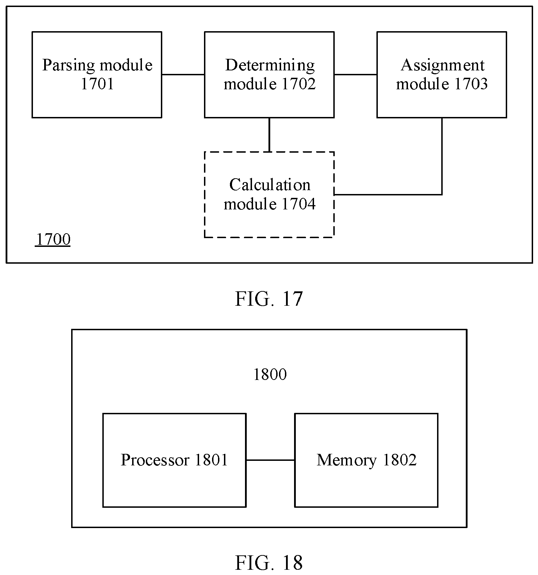

When each functional module is obtained through division based on a corresponding function, FIG. 17 is a possible schematic structural diagram of the decoding apparatus for predicting motion information in the foregoing embodiments. As shown in FIG. 9, the decoding apparatus 1700 for predicting motion information may comprise a parsing module 1701, a determining module 1702, and an assignment module 1703. Specifically, functions of the modules are as follows:

The parsing module 1701 is configured to parse a bitstream to obtain a first identifier.

The determining module 1702 is configured to determine a target element from a first candidate set based on the first identifier, where elements in the first candidate set comprise at least one first candidate motion information and at least one second candidate set, elements in the second candidate set comprise a plurality of second candidate motion information, or the first candidate motion information comprises first motion information, and the second candidate motion information comprises a preset motion information offset.

The assignment module 1703 is configured to: when the target element is the first candidate motion information, use the first candidate motion information as target motion information, where the target motion information is used to predict motion information of a to-be-processed picture block.

The parsing module 1701 is further configured to: when the target element is the second candidate set, parse the bitstream to obtain a second identifier; and the determining module 1702 is further configured to determine the target motion information from the plurality of pieces of second candidate motion information based on the second identifier. Alternatively, the parsing module 1701 is configured to: when the target element is obtained based on the plurality of second candidate motion information, parse the bitstream to obtain a second identifier, and determine the target motion information based on the second identifier and one of the plurality of second candidate motion information.

The parsing module 1701 is configured to support the decoding apparatus 1700 for predicting motion information in performing S1501, S1505, and the like in the foregoing embodiments, and/or is configured to perform another process of the technology described in this specification. The determining module 1702 is configured to support the decoding apparatus 1700 for predicting motion information in performing S1502 and the like in the foregoing embodiments, and/or is configured to perform another process of the technology described in this specification. The assignment module 1703 is configured to support the decoding apparatus 1700 for predicting motion information in performing S1502 and the like in the foregoing embodiments, and/or is configured to perform another process of the technology described in this specification.

In a feasible implementation, when the target element determined by the determining module 1702 is the second candidate set, or when the target element is obtained based on the plurality of second candidate motion information, the parsing module 1701 is further configured to: parse the bitstream to obtain a third identifier, where the third identifier comprises a preset coefficient.

Further, as shown in FIG. 17, the decoding apparatus 1700 for predicting motion information may further comprise a calculation module, configured to multiply the plurality of preset motion information offsets by the preset coefficient, to obtain a plurality of adjusted motion information offsets. Correspondingly, the determining module 1702 is specifically configured to determine the target offset from the plurality of adjusted motion information offsets based on the second identifier.

All related content of the steps in the foregoing method embodiments may be cited in function descriptions of a corresponding function module. Details are not described herein again.

Although specific aspects of this application have been described with reference to the video encoder 100 and the video decoder 200, it should be understood that the techniques of this application may be applied by using many other video encoding and/or decoding units, processors, processing units, for example, a hardware-based coding unit of an encoder/decoder (CODEC), and the like. In addition, it should be understood that the steps shown and described in FIG. 17 are provided merely as a feasible implementation. In other words, the steps shown in the feasible implementation of FIG. 17 does not necessarily need to be performed in the order shown in FIG. 17, and fewer, additional, or alternative steps may be performed.

When an integrated unit is used, FIG. 18 is a schematic structural block diagram of a decoding apparatus 1800 for predicting motion information according to an embodiment of this application. Specifically, the decoding apparatus 1800 for predicting motion information comprises a processor 1801 and a memory 1802 coupled to the processor. The processor 1801 is configured to execute the embodiment shown in FIG. 17 and various feasible implementations.

The processing module 1801 may be a processor or a controller, for example, may be a central processing unit (Central Processing Unit, CPU), a general-purpose processor, a digital signal processor (Digital Signal Processor, DSP), an ASIC, an FPGA or another programmable logic device, a transistor logic device, a hardware component, or any combination thereof. The processing unit 1202 may implement or execute various example logical blocks, modules, and circuits described with reference to content disclosed in this application. The processor may alternatively be a combination of processors implementing a computing function, for example, a combination of one or more microprocessors or a combination of a DSP and a microprocessor. The storage module 102 may be a memory.

All related content of the scenarios in the foregoing method embodiments may be cited in function description of the corresponding function modules. Details are not described herein again.

Both the decoding apparatus 1700 for predicting motion information and the decoding apparatus 1800 for predicting motion information may perform the decoding method for predicting motion information shown in FIG. 15. The decoding apparatus 1700 for predicting motion information and the decoding apparatus 1800 for predicting motion information may be specifically video decoding apparatuses or other devices with video encoding and decoding functions. The decoding apparatus 1700 for predicting motion information and the decoding apparatus 1800 for predicting motion information may be configured to perform picture prediction in a decoding process.

An embodiment of this application provides an inter prediction apparatus. The inter prediction apparatus may be a video decoder, a video encoder, or a decoder. Specifically, the inter prediction apparatus is configured to perform steps performed by the inter prediction apparatus in the foregoing inter prediction method. The inter prediction apparatus provided in this embodiment of this application may comprise modules corresponding to the corresponding steps.

In the embodiments of this application, the inter prediction apparatus may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. In this embodiment of this application, division into the modules is an example, and is merely logical function division. There may be another division manner in actual implementation.

This application further provides a terminal. The terminal comprises one or more processors, a memory, and a communications interface. The memory and the communications interface are coupled to the one or more processors. The memory is configured to store computer program code. The computer program code comprises an instruction. When the one or more processors execute the instruction, the terminal performs the decoding method for predicting motion information in the embodiments of this application.

The terminal herein may be a video display device, a smartphone, a portable computer, or another device that can process or play a video.

This application further provides a video decoder, including a non-volatile storage medium and a central processing unit. The non-volatile storage medium stores an executable program. The central processing unit is connected to the non-volatile storage medium, and executes the executable program to perform the decoding method for predicting motion information in the embodiments of this application.

This application further provides a decoder. The decoder comprises the decoding apparatus for predicting motion information in the embodiments of this application.

Another embodiment of this application further provides a computer-readable storage medium. The computer-readable storage medium comprises one or more program code. The one or more programs comprise an instruction. When a processor of a terminal executes the program code, the terminal performs the decoding method for predicting motion information shown in FIG. 15.

In another embodiment of this application, a computer program product is further provided. The computer program product comprises a computer-executable instruction. The computer-executable instruction is stored in a computer-readable storage medium. At least one processor of a terminal may read the computer-executable instruction from the computer-readable storage medium. The at least one processor executes the computer-executable instruction, to enable the terminal to perform the decoding method for predicting motion information shown in FIG. 15.

All or some of the foregoing embodiments may be implemented by using software, hardware, firmware, or any combination thereof. When a software program is used to implement the embodiments, all or some of the embodiments may be implemented in a form of a computer program product. The computer program product comprises one or more computer instructions. When the computer program instructions are loaded and executed on a computer, the procedures or functions according to the embodiments of this application are all or partially generated.

The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

Further, it should be understood that depending on the feasible implementations, specific actions or events in any of the methods described in this specification may be performed in different orders, an action or event may be added, or the actions or events may be combined, or omitted (for example, not all of the described actions or events are necessary for implementing the methods). Further, in a particular feasible implementation, the actions or events may (for example) undergo multi-threading processing or interrupt processing, or may be processed by a plurality of processors simultaneously instead of sequentially. Further, although a particular aspect of this application is described as being performed by a single module or unit for purposes of clarity, it should be understood that the techniques of this application may be performed by a combination of units or modules associated with a video decoder.

In one or more feasible implementations, the described functions may be implemented by using hardware, software, firmware, or any combination thereof. If the functions are implemented by using software, the functions may be stored in a computer-readable medium as one or more instructions or code or be transmitted through a computer-readable medium, and be performed by a hardware-based processing unit. The computer-readable medium may comprise a computer-readable storage medium or a communications medium. The computer-readable storage medium corresponds to a tangible medium such as a data storage medium. The communications medium comprises any medium that facilitates transmission of a computer program (for example) from one location to another location according to a communications protocol.

In this manner, the computer-readable medium may correspond to, for example, (1) a non-transitory tangible computer-readable storage medium, or (2) a communications medium such as a signal or a carrier. The data storage medium may be any available medium that can be accessed by one or more computers or one or more processors to retrieve instructions, code, and/or data structures for implementing the technologies described in this application. A computer program product may comprise a computer-readable medium.

By way of a feasible implementation rather than a limitation, the computer-readable storage medium may comprise a RAM, a ROM, an EEPROM, a CD-ROM or another optical disk storage apparatus, a magnetic disk storage apparatus or another magnetic storage apparatus, a flash memory, or any other medium that can be used to store required code in a form of an instruction or a data structure and that can be accessed by a computer. Likewise, any connection may be appropriately referred to as a computer-readable medium. For example, if an instruction is transmitted from a website, server, or another remote source through a coaxial cable, an optical fiber, a twisted pair, a digital subscriber line (DSL), or wireless technologies such as infrared, radio, and microwave, the coaxial cable, optical fiber, twisted pair, DSL, or wireless technologies such as infrared, radio, and microwave are comprised in a definition of medium.

However, it should be understood that the computer-readable storage medium and the data storage medium may not comprise a connection, a carrier, a signal, or another transitory medium, but alternatively mean non-transitory tangible storage media. A magnetic disk and an optical disc described in this specification comprise a compact disc (CD), a laser disc, an optical disc, a digital versatile disc (DVD), a floppy disk, and a Blu-ray disc. The magnetic disk usually reproduces data magnetically, and the optical disc reproduces data optically through a laser. A combination of the foregoing magnetic disk and optical disc shall also be comprised in a scope of the computer-readable medium.

An instruction may be executed by one or more processors such as one or more digital signal processors (DSP), general-purpose microprocessors, application-specific integrated circuits (ASIC), field programmable gate arrays (FPGA), or other equivalent integrated or discrete logic circuits. Therefore, the term "processor" used in this specification may be any one of the foregoing structures or another structure that is used to implement the technologies described in this specification. In addition, in some aspects, the functionality described in this specification may be provided in a dedicated hardware and/or software module configured for encoding and decoding, or may be incorporated into a combined codec. Likewise, the technologies may all be implemented in one or more circuits or logic elements.

The technologies in this application may be implemented in various apparatuses or devices, including a wireless mobile phone, an integrated circuit (IC), or a set of ICs (for example, a chip set). Various components, modules, or units are described in this application to emphasize functional aspects of an apparatus configured to perform the disclosed technologies, but are not necessarily implemented by different hardware units. More specifically, as described above, various units may be combined in a codec hardware unit or provided by a set of interoperable hardware units (including one or more processors as described above) in conjunction with suitable software and/or firmware.

The foregoing descriptions are merely examples of specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A decoding method for predicting motion information, comprising:

   parsing a bitstream to obtain a first identifier;
   determining a target element from a first candidate set, based on the first identifier, wherein elements in the first candidate set comprise at least one first candidate motion information and a plurality of second candidate motion information, the first candidate motion information comprises first motion information, and the second candidate motion information comprises a preset motion information offset; and
   when the target element is the first candidate motion information, using the first candidate motion information as target motion information, wherein the target motion information is used to predict motion information of a to-be-processed picture block; or
   when the target element is obtained based on the plurality of second candidate motion information, parsing the bitstream to obtain a second identifier, and determining the target motion information based on the second identifier and one of the plurality of second candidate motion information.

2. The method according to claim 1, wherein the first candidate motion information comprises motion information of a spatially neighboring picture block of the to-be-processed picture block.

3. The method according to claim 1 or 2, wherein the second candidate motion information is obtained based on the first motion information and the preset motion information offset.

4. The method according to claim 1 or 2, wherein the determining the target motion information based on the second identifier and one of the plurality of second candidate motion information comprises:

   determining a target offset from a plurality of preset motion information offsets based on the second identifier; and
   determining the target motion information based on the first motion information and the target offset.

5. The method according to any one of claims 1 to 4, wherein in the at least one first candidate motion information, a coded codeword which is used to identify the first motion information is the shortest codeword.

6. The method according to any one of claims 1 to 5, wherein when the target element is obtained based on the plurality of second candidate motion information, the method further comprises:
   parsing the bitstream to obtain a third identifier, wherein the third identifier comprises a preset coefficient.

7. The method according to claim 6, wherein before the determining the target motion information based on the second identifier and one of the plurality of second candidate motion information, the method further comprises:
   multiplying the plurality of preset motion information offsets by the preset coefficient, to obtain a plurality of adjusted motion information offsets.

8. The method according to any one of claims 1 to 7, wherein that the target motion information is used to predict motion information of a to-be-processed picture block comprises:
   using the target motion information as the motion information of the to-be-processed picture block; or
   using the target motion information as predicted motion information of the to-be-processed picture block.

9. The method according to any one of claims 1 to 8, wherein a fixed-length coding mode is used for the second identifier.

10. The method according to any one of claims 1 to 8, wherein a variable-length coding mode is used for the second identifier.

11. A decoding apparatus for predicting motion information, comprising:

a parsing module, configured to parse a bitstream to obtain a first identifier;

a determining module, configured to determine a target element from a first candidate set based on the first identifier, wherein elements in the first candidate set comprise at least one first candidate motion information and a plurality of second candidate motion information, the first candidate motion information comprises first motion information, and the second candidate motion information comprises a preset motion information offset; and

an assignment module, configured to: when the target element is the first candidate motion information, use the first candidate motion information as target motion information, wherein the target motion information is used to predict motion information of a to-be-processed picture block; wherein

the parsing module is further configured to: when the target element is obtained based on the plurality of second candidate motion information, parse the bitstream to obtain a second identifier, and determine the target motion information based on the second identifier and one of the plurality of second candidate motion information.

12. The apparatus according to claim 11, wherein the first candidate motion information comprises motion information of a spatially neighboring picture block of the to-be-processed picture block.

13. The apparatus according to claim 11 or 12, wherein the second candidate motion information is obtained based on the first motion information and the preset motion information offset.

14. The apparatus according to claim 11 or 12, wherein the parsing module is specifically configured to:

determine a target offset from a plurality of preset motion information offsets based on the second identifier; and

determine the target motion information based on the first motion information and the target offset.

15. The apparatus according to any one of claims 11 to 14, wherein in the at least one first candidate motion information, a coded codeword which is used to identify the first motion information is the shortest codeword.

16. The apparatus according to any one of claims 11 to 15, wherein when the target element is obtained based on the plurality of second candidate motion information, the parsing module is further configured to:

parse the bitstream to obtain a third identifier, wherein the third identifier comprises a preset coefficient.

17. The apparatus according to claim 16, wherein the apparatus further comprises:

a calculation module, configured to multiply the plurality of preset motion information offsets by the preset coefficient, to obtain a plurality of adjusted motion information offsets.

18. The apparatus according to any one of claims 11 to 17, wherein the determining module is specifically configured to:

use the target motion information as the motion information of the to-be-processed picture block; or use the target motion information as predicted motion information of the to-be-processed picture block.

19. The apparatus according to any one of claims 11 to 18, wherein a fixed-length coding mode is used for the second identifier.

20. The apparatus according to any one of claims 11 to 18, wherein a variable-length coding mode is used for the second identifier.

Source apparatus 10

| Video source 120 | → | Video encoder 100 | → | Output interface 140 |

Storage apparatus 40

_30_

Destination apparatus 20

| Display apparatus 220 | ← | Video decoder 200 | ← | Input interface 240 |

FIG. 1

FIG. 2

FIG. 3

FIG. 4

200

Start

Generate a candidate list for a current prediction unit — 202

Generate a prediction video block associated with a candidate in the candidate list — 204

Select a candidate from the candidate list — 206

Output the candidate — 208

End

FIG. 5

210

```
            ┌─────────┐
            │  Start  │
            └────┬────┘
                 │
                 ▼
```

Generate one or more motion vectors for a current prediction unit — 211

Generate a prediction video block for the current prediction unit — 212

Generate a candidate list for the current prediction unit — 213

Generate a motion vector difference — 214

Select a candidate from the candidate list — 215

Output a reference picture index, a candidate index, and a motion vector difference for the selected candidate — 216

```
            ┌─────────┐
            │   End   │
            └─────────┘
```

FIG. 6

220

Start

Receive an indication for a selected motion candidate

222

Generate a candidate list for a current prediction unit

224

Determine motion information of the current prediction unit

225

Generate a prediction video block for the current prediction unit

226

End

FIG. 7

FIG. 8

902

Consider first four spatial candidates

904
Four spatial candidates?

No → 918
Consider a fifth spatial candidate

Yes

906
Consider a temporal candidate

920
Consider a temporal candidate

908
Five candidates?

Yes

922
Five candidates?

Yes

No

910
Consider a fifth spatial candidate

No

912
Five candidates?

No → 914
Add an artificially generated candidate

Yes

916
Five candidates?

No

Yes

End

FIG. 9

Original merge candidate predicted motion vector list

| Merge index | List 1 | List 2 |
|:---:|:---:|:---:|
| 0 | mvL0_A,ref0 | - |
| 1 | - | mvL1_B,ref0 |
| 2 | | |
| 3 | | |
| 4 | | |

Merge candidate predicted motion vector list to which
a combined candidate predicted motion vector is added

| Merge index | List 1 | List 2 |
|:---:|:---:|:---:|
| 0 | mvL0_A,ref0 | - |
| 1 | - | mvL1_B,ref0 |
| 2 | mvL0_A,ref0 | mvL1_B,ref0 |
| 3 | | |
| 4 | | |

Combine

Combine

L0R0          Current frame          L1R0

mvL0_B(uni)

mvL0_A(uni)

mvL0_B(bi)

mvL0_A(bi)

FIG. 10

Original merge candidate predicted motion vector list

| Merge index | List 1 | List 2 |
| --- | --- | --- |
| 0 | mvL0_A,ref0 | - |
| 1 | - | mvL1_A,ref1 |
| 2 | | |
| 3 | | |
| 4 | | |

Merge candidate predicted motion vector list to which a scaled
candidate predicted motion vector is added

| Merge index | List 1 | List 2 |
| --- | --- | --- |
| 0 | mvL0_A,ref0 | - |
| 1 | - | mvL1_A,ref1 |
| 2 | mvL0_A,ref0 | mvL0'_A,ref0' |
| 3 | mvL1'_A,ref1' | mvL1_A,ref1 |
| 4 | | |

Scale

FIG. 11

Original merge candidate predicted motion vector list

| Merge index | List 1 | List 2 |
|---|---|---|
| 0 | mvL0_A,ref0 | - |
| 1 | - | mvL1_B,ref0 |
| 2 | mvL0_A,ref0 | mvL1_B,ref0 |
| 3 | - | - |
| 4 | - | - |

Add a zero motion vector

Candidate predicted motion vector list to
which the zero motion vector is added

| Merge index | List 1 | List 2 |
|---|---|---|
| 0 | mvL0_A,ref0 | - |
| 1 | - | mvL1_B,ref0 |
| 2 | mvL0_A,ref0 | mvL1_B,ref0 |
| 3 | (0, 0), ref0 | (0, 0), ref0 |
| 4 | (0,0),ref1 | (0,0),ref1 |

FIG. 12

FIG. 13

Candidate motion vector set

MV from a left
adjacent block

MV from an upper
adjacent block

MV from a temporal
correlation block

MV=0

MV obtained through
combination

⋮

First motion vector set

0,1

[0,−1]

[1,0]

[−1.0]

Vector difference set

FIG. 14A

Candidate motion vector set

MV from a left
adjacent block

MV from an upper
adjacent block

MV from a temporal
correlation block

MV=0

MV obtained through
combination

MV for vector difference
set calculation

⋮

First motion vector set

[0,1]

[0,−1]

[1,0]

[−1,0]

Vector difference set

FIG. 14B

A decoding apparatus parses a bitstream to obtain a first identifier — S1501

The decoding apparatus determines a target element from a first candidate set based on the first identifier — S1502

Parse the bitstream to obtain a second identifier, and determine target motion information based on the second identifier and one of a plurality of pieces of second candidate motion information — S1504

When the target element is first candidate motion information, use the first candidate motion information as target motion information — S1503

Parse the bitstream to obtain a third identifier — S1505

FIG. 15

Merge candidate list

| Candidate 0 |
| Candidate 1 |
| ... |
| Candidate N |
| Flag bit |

Indicating →

| Candidate A |
| Candidate B |
| ... |
| Candidate X |

FIG. 16A

Merge candidate list

| | |
|---|---|
| Candidate 0 | Candidate A |
| Candidate 1 | Candidate B |
| ... | ... |
| Flag bit | Candidate X |
| ... | |
| Candidate N | |

Indicating →

FIG. 16B

Merge candidate list

| | |
|---|---|
| Candidate 0 | Candidate A1 |
| Candidate 1 | Candidate B1 |
| ... | ... |
| Flag bit 1 | Candidate X1 |
| ... | |
| Candidate N | |
| Flag bit 2 | |

Indicating →

Indicating →

| |
|---|
| Candidate A2 |
| Candidate B2 |
| ... |
| Candidate X2 |

FIG. 16C

| Parsing module 1701 | Determining module 1702 | Assignment module 1703 |

Calculation module 1704

1700

FIG. 17

1800

| Processor 1801 | Memory 1802 |

FIG. 18

## INTERNATIONAL SEARCH REPORT

| International application No. |
|---|
| **PCT/CN2019/105711** |

**A.      CLASSIFICATION OF SUBJECT MATTER**

H04N 19/52(2014.01)i

According to International Patent Classification (IPC) or to both national classification and IPC

**B.      FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

DWPI; VEN; CNABS; CNTXT; JVET: 标识, 指示, 指标, 旗标, 比特, 运动矢量, 运动信息, 预测, 候选, 备选, 表, 人工, 额外, 附加, 偏移, 偏置, flag, bit, identifier, indicate, motion, vector, MV, MVP, predictor, candidate, list, artificial, additional, offset

**C.      DOCUMENTS CONSIDERED TO BE RELEVANT**

| Category* | Citation of document, with indication, where appropriate, of the relevant passages | Relevant to claim No. |
|---|---|---|
| A | CN 104126302 A (QUALCOMM INCORPORATED) 29 October 2014 (2014-10-29) entire document | 1-20 |
| A | CN 103907346 A (MEDIATEK INC.) 02 July 2014 (2014-07-02) entire document | 1-20 |
| A | CN 105308967 A (SAMSUNG ELECTRONICS CO., LTD.) 03 February 2016 (2016-02-03) entire document | 1-20 |
| A | EP 3062518 A1 (ELECTRONICS AND TELECOMMUNICATIONS RESEARCH INSTITUTE) 31 August 2016 (2016-08-31) entire document | 1-20 |
| A | CHEN, Xu. "Joint Video Experts Team (JVET) of ITU-T SG 16 WP 3 and ISO/IEC JTC 1/SC 29/WG 11, JVET-K0198" *CE 4: Enhanced Merge Mode (Test 4.2.15),* 18 July 2018 (2018-07-18), entire document | 1-20 |

☐ Further documents are listed in the continuation of Box C.          ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 November 2019** | **26 November 2019** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

| INTERNATIONAL SEARCH REPORT Information on patent family members | | International application No. PCT/CN2019/105711 |
|---|---|---|

| Patent document cited in search report | | | Publication date (day/month/year) | Patent family member(s) | | | Publication date (day/month/year) |
|---|---|---|---|---|---|---|---|
| CN | 104126302 | A | 29 October 2014 | CA | 2853834 | C | 30 May 2017 |
| | | | | JP | 5908600 | B2 | 26 April 2016 |
| | | | | SG | 11201401547 X | A | 27 June 2014 |
| | | | | CA | 2853834 | A1 | 16 May 2013 |
| | | | | EP | 2777262 | A1 | 17 September 2014 |
| | | | | RU | 2577779 | C2 | 20 March 2016 |
| | | | | JP | 2014535249 | A | 25 December 2014 |
| | | | | BR | 112014010821 | A2 | 13 June 2017 |
| | | | | HK | 1199994 | A1 | 24 July 2015 |
| | | | | TW | 201338549 | A | 16 September 2013 |
| | | | | KR | 101626690 | B1 | 01 June 2016 |
| | | | | ZA | 201404178 | B | 31 July 2019 |
| | | | | IL | 232285 | A | 31 March 2019 |
| | | | | KR | 20140092876 | A | 24 July 2014 |
| | | | | AU | 2012335887 | B2 | 24 March 2016 |
| | | | | US | 2013114717 | A1 | 09 May 2013 |
| | | | | IL | 232285 | D0 | 30 June 2014 |
| | | | | WO | 2013070757 | A1 | 16 May 2013 |
| | | | | CN | 104126302 | B | 04 August 2017 |
| | | | | BR | 112014010821 | A8 | 20 June 2017 |
| | | | | EP | 2777262 | B1 | 17 October 2018 |
| | | | | AU | 2012335887 | A1 | 29 May 2014 |
| | | | | RU | 2014123368 | A | 20 December 2015 |
| | | | | TW | I544783 | B | 01 August 2016 |
| | | | | IN | 3309CHN2014 | A | 09 October 2015 |
| CN | 103907346 | A | 02 July 2014 | EP | 2727366 | B1 | 03 October 2018 |
| | | | | US | 2014241434 | A1 | 28 August 2014 |
| | | | | CN | 103907346 | B | 24 May 2017 |
| | | | | EP | 2727366 | A1 | 07 May 2014 |
| | | | | AU | 2012323631 | B2 | 17 September 2015 |
| | | | | EP | 2727366 | A4 | 05 August 2015 |
| | | | | WO | 2013053309 | A1 | 18 April 2013 |
| | | | | AU | 2012323631 | A1 | 13 February 2014 |
| CN | 105308967 | A | 03 February 2016 | US | 2016134883 | A1 | 12 May 2016 |
| | | | | EP | 2983366 | A1 | 10 February 2016 |
| | | | | EP | 2983366 | A4 | 21 December 2016 |
| | | | | WO | 2014163457 | A1 | 09 October 2014 |
| | | | | KR | 20140122197 | A | 17 October 2014 |
| EP | 3062518 | A1 | 31 August 2016 | EP | 3062518 | A4 | 31 May 2017 |
| | | | | US | 10412403 | B2 | 10 September 2019 |
| | | | | KR | 20150047414 | A | 04 May 2015 |
| | | | | US | 2016381374 | A1 | 29 December 2016 |
| | | | | US | 10080029 | B2 | 18 September 2018 |
| | | | | US | 2018359481 | A1 | 13 December 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811068957
- CN 201811264674